# EUROPÄISCHE PATENTSCHRIFT

(11) **EP 1 268 954 B1**
(45) Veröffentlichungstag und Bekanntmachung des Hinweises auf die Patenterteilung: **23.01.2013**
(21) Anmeldenummer: 00929264.0
(22) Anmeldetag: 31.03.2000
(51) Int. Cl.: E04F 13/14, E04F 15/02, B44C 3/04, B44C 5/04, B29C 67/24

(54) **Arbeitsverfahren zur Herstellung von dekorativen Schichtbahnen mit verfestigten Sandschichten und zum Aufbringen der Schichtbahnen auf Wände, Decken oder Böden, Vorrichtung zur Durchführung dieses Verfahrens und Wände, Decken oder Böden versehen mit solchen Schichtbahnen**
Method for manufacturing decorative sheets with consolidated sand layers and for applying said sheets on walls, ceilings or floors, a device for carrying out said method and walls, ceilings or floors provided such sheets
Procédé pour fabriquer des feuilles décoratives avec des couches de sable consolidées et pour appliquer ces feuilles sur des murs, plafonds ou sols, dispositif pour mettre en oeuvre ce procédé, et murs, plafonds ou sols avec des telles feuilles

(43) Veröffentlichungstag der Anmeldung: 02.01.2003
(73) Patentinhaber: Neupert, Dieter, Dr., 14476 Potsdam-Fahrland (DE)
(72) Erfinder: HENTSCHEL, Winfried, D-27356 Rotenburg/Wümme (DE)
(74) Vertreter: Müller Schupfner & Partner
(86) Internationale Anmeldenummer: PCT/DE2000/000963
(87) Internationale Veröffentlichungsnummer: WO 2001/075246

(56) Entgegenhaltungen:
- EP-A2- 0 692 393
- CH-A- 237 752
- DE-A1- 2 042 404
- US-A- 4 243 696
- PATENT ABSTRACTS OF JAPAN vol. 1997, no. 10, 31. Oktober 1997 (1997-10-31) & JP 09 141623 A (SLIONTEC:KK;SERUTETSUKU KK), 3. Juni 1997 (1997-06-03)
- PATENT ABSTRACTS OF JAPAN vol. 1998, no. 04, 31. März 1998 (1998-03-31) & JP 09 309297 A (THREE BOND CO LTD;SURIIBONDO UNICOM KK; HOKUKON:KK), 2. Dezember 1997 (1997-12-02)
- ZIMMERMANN M: "Erfahrungen bei der Abnahme grosser Lackprofile", PRAEPARATOR, VERBAND DEUTSCHER PRAEPARATOREN E. V., BOCHUM, DE, vol. 11, no. 1, 1 January 1965 (1965-01-01), pages 146-150, XP002989753, ISSN: 0032-6542
- ZIEGERT H: "Eine Methode zur Konservierung eines Marschenprofils", KUNDE N.F, XX, XX, vol. 40, 1 January 1989 (1989-01-01), pages 185-188, XP002990617,
- WOEHLERT M: "LACKPROFILE - MOEFLICHKEITEN EINER UMWELTSCHONENDEN HERSTELLUNG", ARBEITSBLAETTER FUER RESTAURATOREN, VON ZABERN, MAINZ AM RHEIN, DE, vol. 20, no. 2, 1 January 1994 (1994-01-01), pages 293-297, XP008052767, ISSN: 0066-5738
- WOEHLERT M: "Lackprofile - M¦glichkeiten einer kosteng}nstigen und umweltschonenden Herstellung", ARCH{OLOGISCHE NACHRICHTEN AUS SCHLESWIG-HOLSTEIN, ARCH{OLOGISCHE GESELLSCHAFT SCHLESWIG-HOLSTEIN E.V..SCHLESWIG, DE, no. 4/5, 1 January 1993 (1993-01-01), pages 110-117, XP008053338, ISSN: 0942-9107
- WALDERS M ET AL: "Ausgrabung und Sicherung eines jungpleistoz{nen Tierf{hrten - Horizontes in Bottop-Welheim", PRAEPARATOR, VERBAND DEUTSCHER PRAEPARATOREN E. V., BOCHUM, DE, vol. 40, no. 4, 1 January 1994 (1994-01-01), pages 125-138, XP002989749, ISSN: 0032-6542
- TUEXEN R: "Ein vereinfachtes Verfahren zur Herstellung von Lackabz}gen von Bodenprofilen", 19570101, no. 6/7, 1 January 1957 (1957-01-01), pages 336-339, XP002989751,
- SEIFERT G: "Lackprofil - Lackfilm - Lackfilmmethode", 19880101, vol. 7, 1 January 1988 (1988-01-01), XP001199796,
- SCHULZ-HANKE H ET AL: "Herstellung von Sediment-Transfer-Pr{paraten (Lackfilmen) mit Epoxidharzen", PRAEPARATOR, VERBAND DEUTSCHER PRAEPARATOREN E. V., BOCHUM, DE, vol. 41, no. 4, 1 January 1995 (1995-01-01), pages 169-178, XP002989750, ISSN: 0032-6542
- SCHLACHT K: "Eine neue Methode zur Konservierung von Bodenprofilen", ZEITSCHRIFT FUER PFLANZENERNAHRUNG, DUNGUNG, BODENKUNDE, VERLAG CHEMIE, BERLIN, DE, vol. 13, 1 January 1929 (1929-01-01), pages 426-431, XP002989752, ISSN: 0372-9702
- VOIGT E: "Die Uebertragung fossiler Wirbeltierleichen auf Zellulosefilm. Eine neue Bergungsmethode f}r Wirbeltiere aus der Braunkohle", PALAEONTOLOGY, BLACKWELL PUBLISHERS, OXFORD, GB, vol. 15, no. 1, 1 January 1933 (1933-01-01), pages 72-78, XP002989717, ISSN: 0031-0239
- VOIGT E: "Die Bedeutung der Lackfilmmethode f}r die vorgeschichtliche Forschung", NACHRICHTENBLATT F}R DEUTSCHE VORZEIT, BARTH, LEIPZIG, DE, vol. II, 1 January 1935 (1935-01-01), pages 117-119, XP002989721, ISSN: 0259-7829
- EHRHARD VOIGT: "Die Lackfilmmethode, ihre Bedeutung und Anwendung in der Palaeontologie, Sedimentpetrographie und Bodenkunde", ZEITSCHRIFT DER DEUTSCHEN GEOLOGISCHEN GESELLSCHAFT, SCHWEIZERBART, STUTTGART, DE, vol. 88, 1 January 1936 (1936-01-01), pages 272-292, XP002989722, ISSN: 0012-0189
- VOIGT E: "DIE MIKROSKOPISCHE SPURENUNTERSUCHUNG IM DURCHFALLENDEN LICHT MIT HILFE DER LACKFILMMETHODE", KRIMINALISTIK, KRIMINALISTIK-VERLAG, HEIDELBERG, DE, vol. 12, 1 January 1938 (1938-01-01), pages 265-269, XP008052768, ISSN: 0023-4699
- VOIGT E: "Der Block-Lackfilm", ZEITSCHRIFT DER DEUTSCHEN GEOLOGISCHEN GESELLSCHAFT, SCHWEIZERBART, STUTTGART, DE, vol. 99, 1 January 1947 (1947-01-01), pages 124-131, XP002989716, ISSN: 0012-0189
- "Mitteilungen aus dem geologischen Staatsinsitut in Hamburg", MITTEILUNGEN AUS DEM GEOLOGISCHEN STAATSINSTITUT IN HAMBURG, GEOLOGISCHES STAATSINSTITUT IN HAMBURG, HAMBURG, DE, vol. 10, no. 19, 1 December 1949 (1949-12-01), pages 111-129, XP002989715, ISSN: 0369-0016
- GITTINS G ET AL: "The lackfilm method for collecting sedimentary peels: archeological applications", JOURNAL OF FIELD ARCHAEOLOGY, BOSTON UNIVERSITY, BOSTON, MA, US, vol. 4, 1 January 1977 (1977-01-01), pages 449-456, XP002989760, ISSN: 0093-4690
- HAEHNEL W: "Die Lackfilmmethode zur Konservierung geologischer Objekte (The lacquer-film method of conserving geological objects, in Curator Vol.4 1962, pp.353-368)", PRAEPARATOR, VERBAND DEUTSCHER PRAEPARATOREN E. V., BOCHUM, DE, vol. 7, no. 4, 1 January 1961 (1961-01-01) , pages 243-263, XP002989718, ISSN: 0032-6542
- AHRENS C ET AL: "Geo-documenta. Lackabz}ge: Geologie-Bodenkunde-Archaeologie", VER¦FFENTLICHUNGEN DES HELMS-MUSEUMS, CHRISTIANS, HAMBURG, DE, no. 27, 1 January 1974 (1974-01-01), pages 1-56, XP002989743, ISSN: 0722-611X
- VOIGT ET AL: "Histologische Untersuchungen an tierischen Weichteilen aus der eozaenen Braunkohle des Gesiseltales", FORSCHUNGEN UND FORTSCHRITTE, SN, BERLIN, DE, vol. 13, no. 1, 1 January 1937 (1937-01-01), pages 10-12, XP002989745, ISSN: 0259-7748
- VOIGT E: "WEICHTEILE AN FISCHEN, AMPHIBIEN UND REPTILIEN AUS DER EOZAENEN BRAUNKOHLE DES GEISELTALES", NOVA ACTA LEOPOLDINA, BARTH, LEIPZIG, DE, vol. 5, no. 27, 1 January 1938 (1938-01-01), pages 115-142, XP008052814, ISSN: 0369-5034
- VOIGT E: "Ein Fischskelett aus dem unteroligozaenen Gr}nsand von Palmnicken im Samland", ZEITSCHRIFT DER DEUTSCHEN GEOLOGISCHEN GESELLSCHAFT, SCHWEIZERBART, STUTTGART, DE, vol. 89, no. 2, 1 January 1937 (1937-01-01), pages 72-76, XP002989759, ISSN: 0012-0189
- BRAND ET AL: "Die Herstellung von Lackprofilen erdfeuchter B¦den", ZEITSCHRIFT FUER PFLANZENERNAHRUNG, DUNGUNG, BODENKUNDE, VERLAG CHEMIE, BERLIN, DE, vol. 86, no. 2, 1 January 1959 (1959-01-01), pages 123-131, XP002989758, ISSN: 0372-9702
- FOUCAR ET AL: "Die Bergung eines Fliesserdeprofils aus dem Saale-Weichsel-Interglaz ial bei Hallean der Saale mittels Lackhautverfahrens", 19380101, no. 14, 1 January 1938 (1938-01-01), pages 104-126, XP002989754,
- FRANZISKET ET AL: "Pr{paration des Torfprofils eines lebenden Hochmoores", PRAEPARATOR, VERBAND DEUTSCHER PRAEPARATOREN E. V., BOCHUM, DE, vol. 8, no. 2, 1 January 1962 (1962-01-01) , pages 47-54, XP002989756, ISSN: 0032-6542
- HONTZSCHEL ET AL: "Die Anwendung des Lackfilms in der Meeres - Geologie", NATUR UND VOLK, IN, vol. 68, no. 3, 1 January 1938 (1938-01-01), pages 117-119, XP002989757, ISSN: 0369-3422
- JESSEN ET AL: "Lackropfile in der erdgeschichtlichen Heimat - Schausammlung", NATUR UND VOLK, IN, vol. 68, no. 3, 1 January 1938 (1938-01-01), pages 120-123, XP002989748, ISSN: 0369-3422
- KRAINITZKI ET AL: "Abnahme und Transport von Lackfilmen", PRAEPARATOR, VERBAND DEUTSCHER PRAEPARATOREN E. V., BOCHUM, DE, vol. 35, no. 2, 1 January 1989 (1989-01-01), pages 61-63, XP002989747, ISSN: 0032-6542
- KRAINITZKI H: "WINTER - TONE - GRABUNGSENDE; SEDIMENTTRANSFERPRAEPARATE UN ABGUESSE UNTER EXTREMEN BEDINGUNGEN", PRAEPARATOR, VERBAND DEUTSCHER PRAEPARATOREN E. V., BOCHUM, DE, vol. 47, no. 4, 1 January 2002 (2002-01-01), pages 145-160, XP002989713, ISSN: 0032-6542
- KUEHNE W G: "Pr{paration von Wirbeltierfossilien aus kolloidalem Gestein - Ein Beh{lter f}r klein Fossilien", 19620101, vol. 36, no. 3/4, 1 January 1962 (1962-01-01), pages 285-286, XP002989767,
- LANOOY R: "Mitteilungen aus der Zentralstelle f}r Pr{parationstechnik der Ruhr-Universit{t Bochum, Nr. 1 ÄLackfilm-MethodeÜ", PRAEPARATOR, VERBAND DEUTSCHER PRAEPARATOREN E. V., BOCHUM, DE, vol. 17, no. 1/2, 1 January 1971 (1971-01-01), pages 72-78, XP002989744, ISSN: 0032-6542
- LIEBIG V ET AL: "Herstellung von Tephra-Lackprofilen", PRAEPARATOR, VERBAND DEUTSCHER PRAEPARATOREN E. V., BOCHUM, DE, vol. 42, no. 1, 1 January 1996 (1996-01-01), pages 1-7, XP002989746, ISSN: 0032-6542
- MATTHIAS ET AL: "Die Lackfilmmethode, ein wichtiges Hilfsmittel der praktischen Urgeschichtsforschung", VORGESCHICHTLICHE MUSEUMARBEIT UND BODENDENKMALPFLEGE, XX, DE, vol. 2, 1 January 1955 (1955-01-01), pages 1-8, XP002990698,
- MAURER F: "Die Abnahme eines grossen Lackprofils im L¦ss", ARBEITSBLAETTER FUER RESTAURATOREN, VON ZABERN, MAINZ AM RHEIN, DE, no. 1, 1 January 1984 (1984-01-01), pages 64-66, XP002989768, ISSN: 0066-5738
- MEYER ET AL: "Lackfilme f}r die geologische Heimatschausammlung in dioarama{hnlicher Aufstellung", PRAEPARATOR, VERBAND DEUTSCHER PRAEPARATOREN E. V., BOCHUM, DE, no. 6/7, 1 January 1960 (1960-01-01), pages 21-25, XP002989755, ISSN: 0032-6542

## Beschreibung

Die Erfindung bezieht sich auf ein Arbeitsverfahren zur Herstellung von verfestigten Sandschichten mit gewünschten Strukturierungen, die mit einer Stützschicht hinterlegt sind, zur späteren Verwendung als aufzubringende Sichtbeläge, und auf eine Vorrichtung zur Durchführung dieses Verfahrens und Wände, Decken und Böden versehen mit den nach dem Verfahren hergestellte verfestigten Sandschichten.

Auf flexible Bahnen mit Bindemitteln aufgebrachte partikuläre Feststoffe sind an sich bekannt. Aus der DE-A-2042404 ist z.B. ein kontinuierliches Verfahren zum Herstellen biegungssteifer Platten für Verkleidungen bekannt, bestehend aus einer mittleren Platte großer Steifigkeit aus einem mit einem Kunstharz getränkten Füllstoff wie Sand und beiderseitiger Abdeckung durch gegenüber der Füllstoffplatte dünne Deckschichten aus einem faserverstärkten Kunstharz, wobei die Deckschichten in Form von Glasfasermatten beiderseits der aus Füllstoff und Harz bestehenden Mittelschicht zugeführt und nur durch das im Gemisch mit dem Füllstoff enthaltene Kunstharz getränkt werden, derart, dass beim Aushärten des aus der mittleren Platte und den Deckschichten bestehenden Laminates die Schichten miteinander verbunden werden. Die EP-A-0692393 offenbart auf Zellulosebahnen mit Klebstoff aufgebrachte pulverförmige Aggregate, z.B. Quarzsand, welche künstlich geschaffene Muster ausbilden und mit Farbe versehbar sind.

Nach der Lackfilmmethode ist es bekannt mit Hilfe von Lacken dünne aber farbgetreue, strukturierte und plastische Schichten eines Böschungsausschnittes herauszupräparieren und dauerhaft auf einer festen Unterlage zu fixieren. Diese Technik wurde um 1930 durch den Geologen und Paläontologen Ehrhard Voigt entwickelt und ist seitdem Gegenstand zahlreicher Veröffentlichungen wie:
- AHRENS C. ET AL.: 'Geo-documenta. Lackabzüge: Geologie-Bodenkunde-Archaeologie' VERÖFFENTLICHUNGEN DES HELMS-MUSEUMS 1974, Seiten 1 - 56,
- BENTZ A.: 'Lehrbuch der angewandten Geologie. - Allgemeine Methoden. Kartierung, Petrographie, Paläontologie, Geophysik, Bodenkunde', Bd. 1, 1961, FERDINAND ENKE, STUTTGART,
- BRAND ET AL: "Die Herstellung von Lackprofilen erdfeuchter Böden", ZEITSCHRIFT FUER PFLANZENERNAHRUNG, DÜNGUNG, BODENKUNDE, VERLAG CHEMIE, BERLIN, DE, Band 86, Nr. 2, 1 Jan. 1959 (1959-O1-O1), S. 123-131,
- BRAUN A.: 'Verfahren der Lackfilm-Analyse in der Mikropräparation von Gesteinen und Fossilien' POSTER-PRAESENTATION, 73. JAHRESTAGUNG DER PALAEONTOLOGISCHEN GESELLSCHAFT, UNI MAINZ
- BRINCH MADSEN: 'Handbook of field conservation', 1994, KOPENHAGEN
- CERPA B : 'Application de la méthode des lackfilms au prélèvement de profils géologiques oupédologiques sur le terrain' (NOTES ET CONTRIBUTIONS, CONTRIBUTION NO.2) 1972, Seiten 1 - 24,
- FIEDLER K.: 'Lackfilme im geologischen Unterbricht' MITTEILUNGEN DES GEOLOGISCH-PALAEONTOL. INSTITUTS DER UNIVERSITAET HAMBURG Bd. 44, Seiten 331 - 342,
- FOUCAR ET AL: "Die Bergung eines Fliesserdeprofils aus dem Saale-Weichsel-Interglaz ial bei Halle an der Saale mittels Lackhautverfahrens", 19380101, Nr. 14, 1 Januar 193 8 (1938-01-01), S. 104-126,
- FRANZISKET, L.: 'Präparation des Torfprofils eines lebenden Hochmoores' DER PRAEPARATOR Bd. 8, Nr. 2, 1962, Seiten 47 - 54,
- GITTINS G., VOIGT E.: 'The lackfilm method for collecting sedimentary peels: archeological applications' J OF FIELD ARCHAEOLOGY Bd. 4, 1977, Seiten 449 - 456,
- GROSS G.: 'Herstellung eines Lackabzugs im Lockergestein (unveröffentlicht)' GEODOCUMENTA. AUSSTELLUNG 17 Januar 1974-10 März 1974, BIELEFELD,
- HAEHNEL W: "Die Lackfilmmethode zur Konservierung geologischer Objekte (The lacquer-film method of conserving geological objects, in Curator Vol.4 1962, S.353-368)", PRAEPARATOR, VERBAND DEUTSCHER PRAEPARATOREN E. V., BOCHUM, DE, Band 7, Nr. 4, 1 Januar 1961 (1961-01-01), S. 243-263,
- HELMS-MUSEUM (HRSG.): 'Geodocumenta. Lackabzüge: Geologie, Bodenkunde, Archäologie' AUSSTELLUNGSFOHRER DES HELMS-MUSEUM -- VERöFFENTLICHUNGEN DES HELMS-MUSEUM Nr. 27, 24 März 1974-01 Juli 1974,
- HERRNBRODT, A.: 'Das Capaplex-Verfahren. Bonner Jahrbücher', Bd. 154, 1954 Seiten 182 - 184,
- HILLMER G, LOBBEN H.: 'Beschreibung der Herstellung von Lackfilmen und 'manipulierten' Erdbildern als Kunst' GEOLOGIE IM BILD: NATUR UND KUNST (AUSSTELLUNG IN DER NIEDERSAECHSISCHEN AKADEMIE DER GEOWISSENSCHAFTEN, ANLAESSLICH DES 5TEN INT'LEN ROHSTOFF-SYMPOSIUMS IN HANNOVER) 15 Oktober 1988 - 30 Oktober 1988, Seite 14,
- HONTZSCHEL, W.: 'Die Anwendung des Lackfilms in der Meeres - Geologie.' NATUR UND VOLK, BERICHT DER SENCKENBERGISCHEN NATURFORSCHENDEN GESELLSCHAFT, Bd. 68, Nr. 3, 1938, Seiten 117 - 119,
- JESSEN ET AL: "Lackropfile in der erdgeschichtlichen Heimat - Schausammlung", NATUR UND VOLK, IN, Band 68, Nr. 3, 1 Januar 1938 (1938-01-01), S. 120-123,
- Krainitzki, H. Lackprofile und ihre Herstellung. Aufschlüsse - Darstellung geologischer Formationen im Lackprofil; eine Ausstellung des Ruhrlandmuseums, Essen. Ausstellungsbroschüre im Selbstverlag,
- KRAINITZKI, H.: 'Abnahme und Transport von Lackfilmen' DER PRAEPARATOR Bd. 35, Nr. 2, 1989, Seiten 61 - 63,
- KRAINITZKI, H.: 'Von der Prospektion zum Exponat - Lackprofile und ihre Herstellung' ARCHAEOLOGISCHE INFORMATIONEN Nr. 1, 1991,
- KRAINITZKI, H.: 'Winter - Tone - Grabungsende. Sedimenttransferpräparate und Abgüsse unter extremen Bedingungen' DER PRAEPARATOR Bd. 47, Nr. 4, 2002, Seiten 145 - 160,
- KRUEGER, F.J.: 'Lackabzüge selbstgemacht' FOSSILIEN - ZEITSCHRIFT FOR SAMMLER UND HOBBYPALOONTOLOGEN Nr. 1, 1985,
- KUEHNE W.G.: 'Präparation von Wirbeltierfossilien aus kolloidalem Gestein - Ein Behälter für klein Fossilien' PALAEONTOLOGISCHE ZEITSCHRIFT Bd. 36, Nr. 3/4, 1962, Seiten 285 - 286,
- 'Lackabzüge - Geologie-Bodenkunde-Archaeologie' GEO-DOCUMENTA 1975, BRAUNSCHWEIG,
- LANOOY R.: 'Eine Methode zum Konservieren von in Ton erhaltenen Fischen.' DER PRAEPARATOR Nr. 10/11, 1964 - 1965,
- LANOOY R.: 'Mitteilungen aus der Zentralstelle für Präparationstechnik der Ruhr-Universität Bochum, Nr. 1 [Lackfilm-Methode].' DER PRAEPARATOR Bd. 17, Nr. 1/2, 1971, Seiten 72 - 78,
- LIEBIG V ET AL: "Herstellung von Tephra-Lackprofilen", PRAEPARATOR, VERBAND DEUTSCHER PRAEPARATOREN E. V., BOCHUM, DE, Band 42, Nr. 1, 1 Januar 1996, S. 1-7,
- MATTHIAS, W.: 'Die Lackfilmmethode, ein wichtiges Hilfsmittel der praktischen Urgeschichtsforschung.' VORGESCHICHTLICHE MUSEUMSARBEIT UND BODENDENKMALPFLEGE Bd. 2, 1955, Seiten 1 - 8,
- MAURER F.: 'Die Abnahme eines grossen Lackprofils im Löss' ARBEITSBLAETTER FUER RESTAURATOREN Nr. 1, 1984, Seiten 64 - 66,
- MEYER, K O.: 'Lackfilme für die geologische Heimatschausammlung in dioarama ähnlicher Aufstellung.' DER PRAEPARATOR Nr. 6/7, 1960 - 1961, Seiten 21 - 25,
- Schirning, H.:Ein Lackfilm entsteht. Leporello des Niedersächsischen Landesmuseums Hannover, 1979,
- SCHLACHT K: "Eine neue Methode zur Konservierung von Bodenprofilen", ZEITSCHRIFT FUER PFLANZENERNAHRUNG, DUNGUNG, BODENKUNDE, VERLAG CHEMIE, BERLIN, DE, Band 13, 1 Januar 1929 (1929-01-01), S. 426-431,
- SCHULZ-HANKE, H.; WALDERS, M.: 'Herstellung von Sediment-Transfer-Präparaten (Lackfilmen) mit Epoxidharzen' DER PRAEPARATOR Bd. 41, Nr. 4, 1995, Seiten 169 - 178,
- SEIFERT G.: 'Lackfilm - Lackfilmethode' ARCHAEOLOGISCHE INFORMATIONEN AUS BADEN-WUERTTEMBERG Bd. 7, 1988, STUTTGART,
- SEYER H.: 'Abformung von Grabungsprofilen und -flächen durch synthetischen Latex.' NACHRICHTEN BLATT FUER VOR- UND FRUEHGESCHICHTE Bd. 14, Nr. 3, 1969, Seiten 109 - 110,
- TUEXEN R.: 'Ein vereinfachtes Verfahren zur Herstellung von Lackabzügen von Bodenprofilen.' MITTEILUNGEN DER FLORISTISCH-SOZIOLOGISCHEN ARBEITSGEMEINSCHAFT N.F. Nr. 6/7, 1957, Seiten 336 - 339,
- Van Baren, J. H. V.; Bomer, W. -- Procedures for the collection and preservation of soil profiles. International Soil Reference and Information Centre, 1979,
- VOIGT E.: 'Der Block-Lackfilm' ZEITSCHRIFT DER DEUTSCHEN GEOLOGISCHEN GESELLSCHAFT Bd. 99, 1947, Seiten 124 - 131,
- VOIGT E.: 'Die Bedeutung der Lackfilmmethode für die vorgeschichtliche Forschung' NACHRICHTENBLATT FOR DIE DEUTSCHE VORZEIT Bd. II, 1935, LEIPZIG, Seiten 117 - 119,
- VOIGT E.: 'Die mikroskopische Spurenuntersuchung im durchfallenden Licht mit Hilfe der Lackfilmmethode', Seiten 265 - 269, - 'Kriminalistik', Bd. 12, 1938,
- VOIGT E.: 'Die Übertragung fossiler Wirbeltierleichen auf Zellulosefilm. Eine neue Bergungsmethode für Wirbeltiere aus der Braunkohle.' PALAEONTOL. ZEITSCHRIFT Bd. 15, Nr. 1, 1933, Seiten 72 - 78,
- VOIGT E.: 'Ein Fischskelett aus dem unteroligozaenen Grünsand von Palmnicken im Samland' ZEITSCHRIFT DER DEUTSCHEN GEOLOGISCHEN GESELLSCHAFT Bd. 89, Nr. 2, 1937, Seiten 72 - 76,
- VOIGT E.: 'Herstellung von geologischen Lackfilmen nach dem Verfahren von Prof. E. Voigt' FALTBLATT DER FIRMA GUSTAV RUTH TEMPEROL WERKE 1965, GERMANY, Seite 3,
- VOIGT E.: 'Mitteilungen aus dem geologischen Staatsinsitut in Hamburg', Bd. 10, 1949 Artikel 'Die Anwendung der Lackfilmmethode bei der Bergung geologischer und bodenkundlicher Profile', Seiten 111 - 129,
- VOIGT E.: 'Weichteile an Fischen, Amphibien u. Reptilien aus der eozaenen Braunkohle des Geiseltales' NOVA ACTA LEOPOLDINA, ABHANDLGN. DER KAISERLICH-LEOPOLDINISCH-CAROLINISCH DEUTSCHEN AKADEMIE DER WISSENSCHAFTEN Bd. 5, Nr. 27, Seiten 115 - 142,
- VOIGT E: "Die Übertragung fossiler Wirbeltierleichen auf Zellulosefilm. Eine neue Bergungsmethode für Wirbeltiere aus der Braunkohle", PALAEONTOLOGY, BLACKWELL PUBLISHERS, OXFORD, GB, Band 15, Nr. 1, 1 Januar 1933 (1933-01-01), S. 72-78,
- VOIGT E: "Ein Fischskelett aus dem unteroligozaenen Grünsand von Palmnicken im Samland", ZEITSCHRIFT DER DEUTSCHEN GEOLOGISCHEN GESELLSCHAFT, SCHWEIZERBART, STUTTGART, DE, Band 89, Nr. 2, 1 Januar 1937 (1937-01-01), S. 72-76,
- VOIGT ET AL: "Histologische Untersuchungen an tierischen Weichteilen aus der eozaenen Braunkohle des Gesiseltales", FORSCHUNGEN UND FORTSCHRITTE, SN, BERLIN, DE, Band 13, Nr. 1, 1 Januar 1937 (1937-01-01), S. 10-12,
- Voigt, E.: "Reichsstelle für den Unterrichtsfilm, Veröffentlichung der R.f.d.U. zu dem Hochschulfilm Nr. C236,
- VOIGT, EHRHARD: 'Die Lackfilmmethode, ihre Bedeutung und Anwendung in der Palaeontologie, Sedimentpetrographie und Bodenkunde' ZEITSCHRIFT DER DEUTSCHEN GEOLOGISCHEN GESELLSCHAFT Bd. 88, 1936, Seiten 272 - 292,
- VOIGT, EHRHARD: 'Histologische Untersuchungen an tierischen Weichteilen aus der eozaenen Braunkohle des Gesiseltales' FORSCHUNGEN U. FORTSCHRITTE - NACHRICHTENBLATT DER DEUTSCHEN WISSENSCHAFT U. TECHNIK Bd. 13, Nr. 1, 01 Januar 1937, Seiten 10 - 12,
- VON FICK C.C.: 'Profilabnahme mit Polyurethan-Fussbodenlacken und Bauschaum als Zwischenmittel. Handbuch der Grabungstechnik', 1994, STUTTGART,
- VOSGERAU H.G.: 'Neue Materialien und Techniken bei der Abnahme von Bodenprofilen' ARCHAEOLOGISCHE MITTEILUNGEN AUS NORDWESTDEUTSCHLAND Nr. 10, 1987,
- WALDERS, M.; SCHULZ-HANKE, H.: 'Ausgrabung und Sicherung eines jungpleistozänen Tierfährten - Horizontes in Bottop-Welheim.' DER PRAEPARATOR Nr. 4, 1994, Seiten 125 - 138,
- WOEHLERT M.: 'Lackprofile - Möglichkeiten einer kostengünstigen und umweltschonenden Herstellung' ARCHAEOLOGISCHE NACHRICHTEN AUS SCHLESWIG-HOLSTEIN Nr. 4/5,1993 - 1994, Seiten 110 - 117,
- WOEHLERT M.: 'Lackprofile - Möglichkeiten einer umweltschonenden Herstellung' ARBEITSBLAETTER FOR RESTAURATOREN Bd. 20, Nr. 2, 1994, Seiten 293 - 297,
- Wutzler, B. -- Jülich und die römische Strasse. Leporello der Rheinbraun, 1991
- ZIEGERT H.: 'Eine Methode zur Konservierung eines Marschenprofils' DIE KUNDE N.F. Bd. 40, 1989, Seiten 185-188,
- ZIMMERMANN M.: 'Erfahrungen bei der Abnahme grosser Lackprofile.' DER PRAEPARATOR Bd. 11, Nr. 1, 1965, Seiten 146 - 150.

Es ist Aufgabe der Erfindung, ein Arbeitsverfahren und eine Vorrichtung zur Durchführung eines Arbeitsverfahrens bereitzustellen, die die maschinelle Herstellung eines Behanges bzw. Belages mit dekorativer Sandschicht für z.B. Wände, Decken oder Böden ermöglicht.

Die gestellte Aufgabe ist erfindungsgemäß durch den Gegenstand der unabhängigen Ansprüche gelöst. Bevorzugte Ausführungsformen der Erfindung sind Gegenstand der Unteransprüche.

Die Versteifungsschicht wird dabei in vorteilhafter Weise aus einem Gemisch von Sand und einem Bindemittel gebildet; sie kann aber ohne weiteres auch aus einem anderen tragfähige Material, wie einer Span- oder MDF-Platte, gebildet sein. Das Aufbringen der Versteifungsschicht erfolgt zweckmäßig gleichzeitig mit dem Schritt des Verpressens, wobei das Bindemittel oder der Klebstoff eine Verbindung zwischen Versteifungsschicht, Sandschicht und der Stützschicht ausbildet. Auf den Zusatz weiteren Bindemittels oder des Klebstoffs kann im Fall des nachfolgenden Ergänzens der Schichtbahn durch eine Feststoffplatte verzichtet werden.

Es kann vorgesehen sein, daß die Schichtbahn nach ihrem Abnehmen maschinell verpreßt wird, wobei das Verpressen vorzugsweise unter Wärmeeinwirkung erfolgt. Hiermit wird eine deutliche Glättung erreicht. Ggf. kann durch das Verpressen und/oder Erwärmen auch eine Formgebung, z.B. zur Ausbildung rundgeformter / gebogener Oberflächen, erfolgen. Weiterhin kann die verfestigte Sandoberfläche nachbehandelt werden, z.B. durch Unterteilen in Fliesenform mit einer Säge, Glätten oder Aufrauhen bzw. Strukturieren z.B. mit einer bandförmige Säge, einem Zinkenkamm oder einer Raspel.

Nach der Erfindung wird, anschließend noch eine Versiegelung der Sichtfläche der Schichtbahn vorgenommen. Mit der Versiegelung wird eine glatte und strapazierfähige Oberfläche geschaffen, die überdies durch diese Behandlung gegen das Eindringen von Flüssigkeiten gesichert sein kann.

Nach einer weiteren Ausgestaltung der Erfindung ist vorgesehen, daß der Sand mittels der Aufnahme von natürlichen Sedimentschichten aus Sand- bzw. Kiesgruben entnommen wird, indem die Aufnahme in die Wandfläche der Grube, die die gewünschten Farbstrukturierungen der Sedimentschicht aufweist, eingedrückt wird, wobei sich bei in die Wandfläche hineindrückender Aufnahme der Aufnahmeraum innerhalb der Aufnahme füllt.

Durch das Einfüllen des Sandes in seiner gewachsenen, vorwiegend durch Linien- oder Streifenmuster farblich differenzierten Sedimentschichtstruktur in die Aufnahme wird es möglich das Aufbringen der Stützschicht vom witterungsabhängigen, offenen Betrieb in eine Praduktionshalle zu verlegen, wo die Arbeiten witterungsunabhängig sind. Somit wird bei Sandschichten in natürlicher Sedimentsehichtstruktur ein vorausplanbarer, geregelter Produktionsablauf möglich. Für die Zeiten ungünstiger Witterung, beispielsweise im Winter, kann ein ausreichender Vorrat an gefüllten Aufnahmen in einem Lagerraum bereitgehalten werden.

Bei dieser Verfahrensweise ist es nicht nötig, die Wandfläche der Sandgrube in irgendeiner Weise für das Aufbringen der Aufnahme vorzubereiten. Die Aufnahme wird einfach, beispielsweise mittels Radlader, an die Wandfläche herangebracht und in diese eingedrückt.

Nach einer weiteren Ausgestaltung der Erfindung ist vorgesehen, daß die Aufnahme bei stillstehender Lademaschine während des Füllvorganges hydraulisch in die Wandfläche eingedrückt wird. Das Füllen erfolgt damit ruhig und ohne die Schichtung beeinträchtigende Störungen.

Nach einer weiteren Ausgestaltung der Erfindung ist vorgesehen, daß in der als Rahmen ausgebildeten Aufnahme Sandschichten verschiedener Färbung in künstlichen Strukturmustern gebildet werden. Solche Strukturmuster können bereits in einer Werkhalle, beispielsweise durch Rühren, Pusten, Schieben verschiedener Sande gebildet werden.

Nach einer weiteren Ausgestaltung der Erfindung ist vorgesehen, daß die Aufnahme nach dem Ausfällen des Füllraumes mit natürlichen Sedimentschichten, noch bevor ihre räumliche Stellung so verändert wird, daß sich die Sandfüllung verschieben könnte, zur Bildung einer die Füllung in ihrer Struktur sichernden Raumbegrenzung an den noch offenen, gefährdeten Umhüllungsflächen des Aufnahmeraumes umschlossen wird. Die im Schürfverfahren gewonnene, sauber in ihrer Struktur aufgefangene Sandfüllung wird so gegen Veränderungen während des Transportes und der Lagerung geschützt.

Nach einer weiteren Ausgestaltung der Erfindung ist vorgesehen, daß die Sandfüllung in der Aufnahme nach dem Abheben einer Sandschicht, die mittels des Klebstoffes/Bindemittels mit der Stützschicht verklebt ist, so verschoben wird, daß die Sandfläche wieder den oberen Rand der Aufnahme, von dem die Sandschicht entnommen ist, erreicht. Auf diese Weise ist ein schichtweises Abtragen des in der Aufnahme befindlichen Sandes möglich, wobei jede neu abgetragene Sandschicht der vorangegangenen Sandschicht entspricht. Auf diese Weise wird es möglich, beispielsweise wie bei Tapeten, sich in der Struktur ergänzende Bahnen in einer Folge aneinander zu reihen.

Die vorrichtungsseitige Aufgabe der gestellten Aufgabe ist erfindungsgemäß dadurch gelöst, daß die Aufnahme aus Wänden besteht, die wenigstens innenseitig überwiegend glattflächig ausgebildet sind, wobei die Aufnahme während des Füllvorganges in der Füllrichtung offen und nach dem Füllvorgang während des Transports, der Lagerung und in der Produktion wenigstens im unteren und seitlichen Bereich geschlossen ist und wobei eine im Produktionsbereich unten befindliche Bodenplatte so ausgebildet ist, daß ein innerhalb der Aufnahme befindlicher Bodenteil in der Aufnahme anhebbar ist, um damit die Sandfüllung anheben zu können. Die verwindungssteife Aufnahme sichert die gewachsene Lagerstruktur im Aufnahmeraum. Die Bodenplatte hält die Lagerstruktur beim Transport und der Lagerung. Der in dem Rahmen schiebliche Bodenteil ermöglicht das schichtweise Abtragen, indem die Sandfüllung schichtweise anhebbar wird.

Nach einer weiteren Ausgestaltung der Erfindung ist vorgesehen, daß der innerhalb der Aufnahme verschiebliche Bodenteil hydraulisch von unten nach oben anhebbar ist.

Nach einer weiteren Ausgestaltung der Erfindung ist vorgesehen, daß die Aufnahme als Rahmen in Form einer rechteckigen Zarge eine großflächige Ladeöffnung aufweist, weil die Zarge nur aus aneinander anschließenden schmalen Seitenwänden besteht. Nach einer weiteren Ausgestaltung der Erfindung kann die Aufnahme als Rahmen in Form einer rechteckigen Hülse eine kleinflächige Ladeöffnung aufweisen, weil die Hülse aus wechselnd aneinander anschließenden schmalen Seitenwänden und großflächigen Hauptwänden besteht.

Nach einer weiteren Ausgestaltung der Erfindung ist vorgesehen, daß die Aufnahme wenigstens aus zwei auf Abstand angeordneten parallelen Seitenwänden besteht, die gleichzeitig in eine Sandschicht einpreßbar sind, und aus einer Boden- und gegebenenfalls auch Deckwand, die zur Begrenzung des Füllraumes nach dem Einpressen der Seitenwände ebenfalls in die Sandschicht einfahrbar sind. Auf diese Weise erfolgt eine zeitlich gestaffelte Ausbildung der Aufnahme. Diese zeitliche Staffelung kann für ein erschütterungsfreies Aufnehmen von großer Bedeutung sein.

Nach einer weiteren Ausgestaltung der Erfindung ist vorgesehen, daß die Aufnahme einen U-formigen Querschnitt mit parallelen Seitenwänden und einer diese verbindenden Bodenwand aufweist. Auch diese Abwandlung der Aufnahme dient einer an die Lagerstruktur angepaßten Aufnahme des Sandes in den Aufnahmeraum.

Nach einer weiteren Ausgestaltung der Erfindung ist vorgesehen, daß die beim Einpressen hintere Seite mittels einer Wand abgeschlossen wird und auch die beim Einpressen vordere Seite gegebenenfalls wenigstens teilweise mittels eines Deckelteiles abgedeckt wird. Auf diese Weise läßt sich gestaffelt eine die Sandstruktur sichernde Umhüllung für das im Aufnahmeraum befindliche Sandgut erreichen.

Nach einer weiteren Ausgestaltung der Erfindung ist vorgesehen, daß die gefüllte Aufnahme mit unten befindliche Bodenplatte in eine Bearbeitungsvornchtung einführbar ist, in der die obere Sandfläche am oben offenen Aufnahmerand mittels eines Rakels glattziehbar ist, in der auf die glattgezogene Sandfläche die bahnenförmig bereitgehaltene Stützschicht aufziehbar ist und in der auf die Stützschicht der in den Sand eindringende Klebstoff/das Bindemittel aufbringbar ist.

Nach einer weiteren Ausgestaltung der Erfindung ist vorgesehen, daß zur Vorgabe der Dicke des auf die Stützschicht aufzubringenden kuchen- oder breiförmigen Materials der Versteifungsschicht der Rakel in einer vorgegebenen Höhe über diese hinwegziehbar ist.

Nach einer weiteren Ausgestaltung der Erfindung ist vorgesehen, daß die Zargenwände doppelwandig mit einer zwischengefügten Versteifung ausgebildet sind, wobei die Versteifung aus gekantetem oder gewelltem, metallischem Material besteht.

Nach einer weiteren Ausgestaltung der Erfindung ist vorgesehen, daß der Klebstoff aufsprüh-, aufstreich-, aufroll - oder aufgießbar ist. Dies sind vorteilhafte Aufbringarten, bei denen der Klebstoff gleichmäßig durch die Stützschicht in eine gewünschte Tiefe der unter der Stützschicht liegenden Sandschicht eindringt.

Die Erfindung wird anhand der Zeichnungen näher erläutert. Es zeigen:
Fig.1 eine verwindungssteife Zarge, die von einem rechteckigen Metallrahmen gebildet ist,
Fig.2 einen Schnitt durch die Zarge nach Fig.1 längs der Linie II-II in Fig.1,
Fig.3 einen von der Zarge nach Fig.1 oder 2 getrennten Verschlußboden,
Fig.4 die Zarge nach Fig.1 oder 2 mit an ihr befestigtem Verschlußboden,
Fig.5 ein als Variante zum Einsatz kommende verwindungssteife metallische Hülse,
Fig.6 einen Schnitt durch die Hülse nach Fig.5 längs der Linie VI-VI in Fig.5,
Fig.7 einen Radlader, der die Zarge nach Fig.1 oder 2 gegen eine Sandgrubenwand drückt, die eine bestimmte natürlich gewachsene Lagerstruktur, bzw. Farbstrukturierung aufweist,
Fig.8 den Radlader beim Handhaben der als Hülse ausgebildeten Zarge nach Fig.5
Fig.9 bis Fig. 12 Teile einer Vorrichtung, mittels der in eine Zarge eingelagerter Sand schichtweise zu Wandbehängen bzw. -belägen abtragbar und verarbeitbar ist. Dabei zeigen

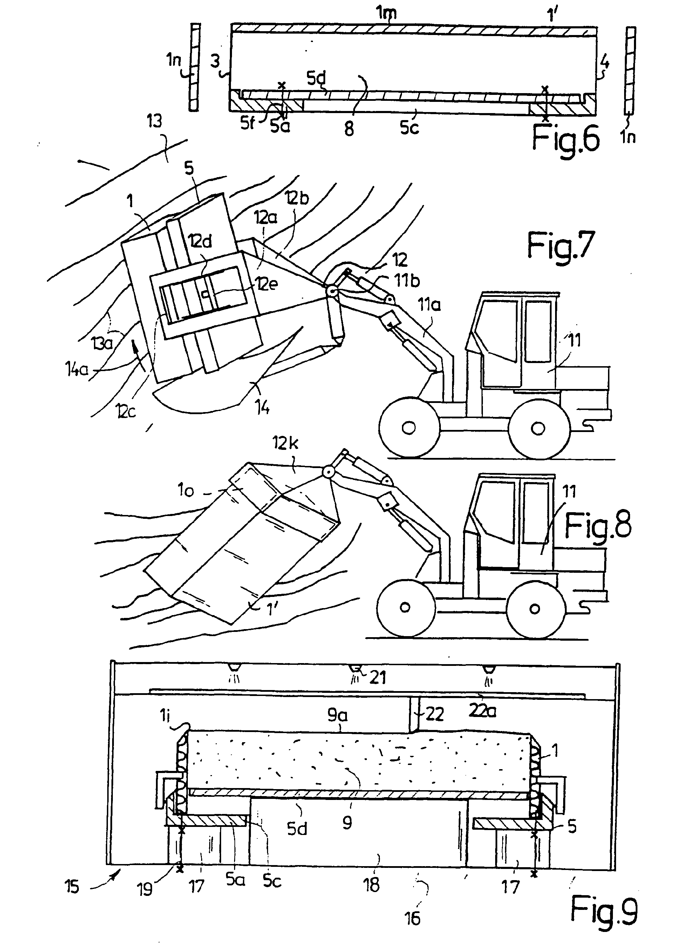

Fig.9 das Anheben des Bodenteiles des Verschlußbodens, eine Sprengleranlage und das Abziehen der obersten Sandfläche mittels einer Rakelvorrichtung,

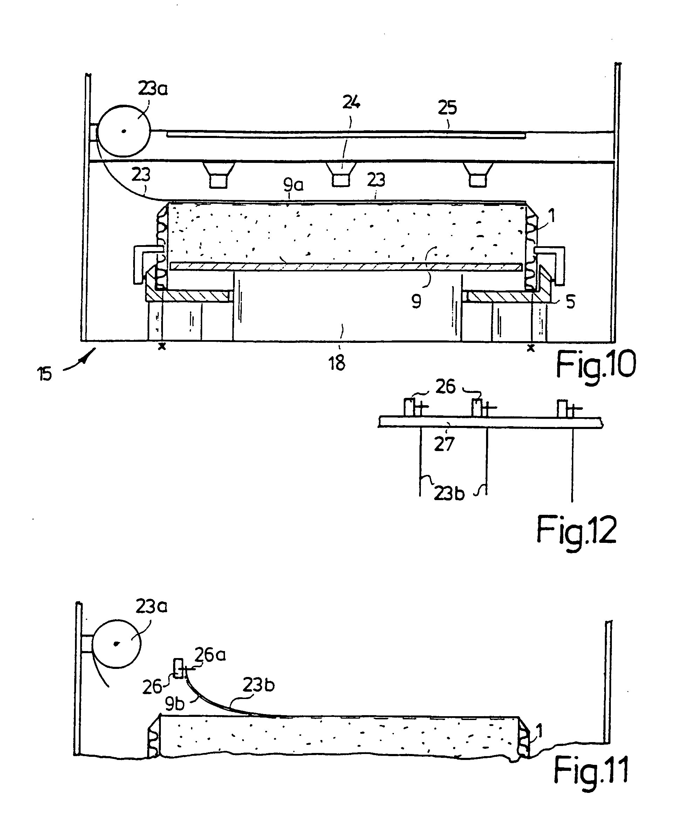

Fig.10 das Auflegen der von einer Rolle abgerollten Stützschicht, die in diesem Fall aus einem Gewebe besteht.
Fig.11 das Anheben einer fertigen Bahn des Wandbehanges- bzw. -belages,
Fig.12 das Aufhänge und auf Vorrathalten gefertigter Bahnen des Wandbehanges bzw. -belages,

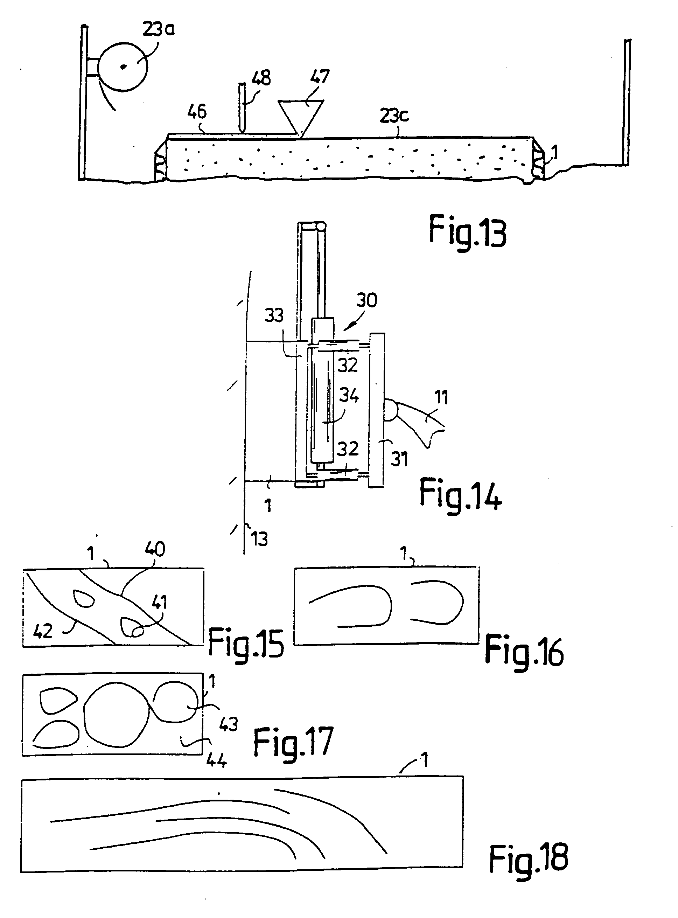

Fig.13 einen weiteren Vorrichtungsteil, mit dem ein zunächst kuchen- oder pastenförmiges Material auf die Stützschicht aufgetragen wird, das nach seinem Aushärten eine Versteifungsschicht bildet,
Fig.14 eine hydraulische Vorrichtung zum stoßfreien Eindrücken eines Rahmens (Zarge oder Hülse)in eine Wandfläche einer Sandgrube, die aus einer Sedimentschichtung besteht,
Fig. 15 - Fig. 18 Beispiele für künstliche oder gemischt natürliche und künstliche Sandstrukturierungen in zur Herstellung der Sandschichten dienenden Rahmen.

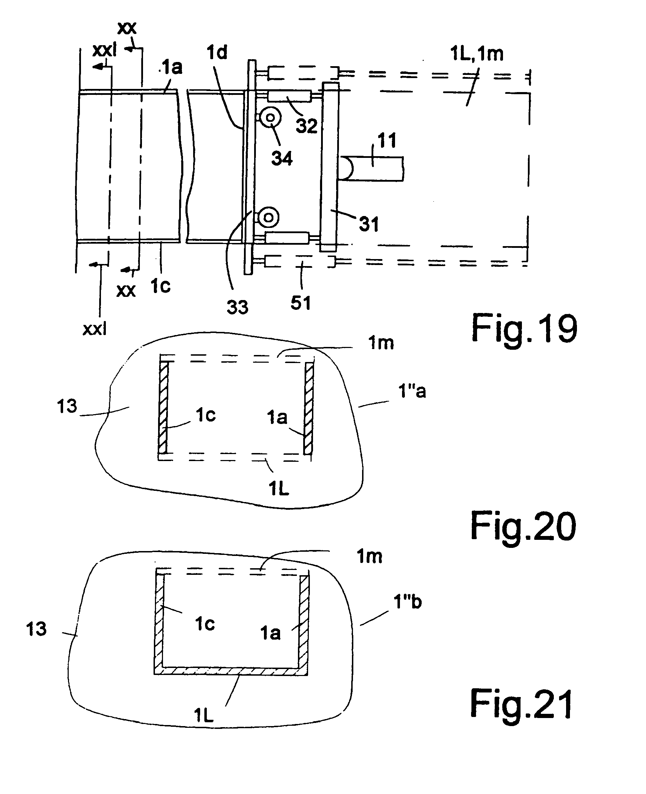

Fig.19 einen als Aufnahme eingesetzten Teilrahmen.
Fig.20 als erste Variante beim Einpressen in eine Sandschicht zunächst nur aus zwei parallelen Seitenwänden besteht, denen dann wenigstens die untere Hauptwand nachgeschoben wird (Schnitt XX nach Fig. 19), und der
Fig.21 als zweite Variante aus zwei parallelen Seitenwänden und der diese verbindenden unteren Hauptwand besteht, wobei das U-Profil dieser zweiten Variante in die Sandschicht eingepreßt wird (Schnitt XXI nach Fig.19).

Das Arbeitsverfahren und die bei der Durchführung des Arbeitsverfahrens benutzten Vorrichtungen dienen dazu, vorzugsweise in einer von Witterungseinflüssen unabhängigen Atmosphäre, serienmäßig Behänge bzw. Beläge zu fertigen, bei denen die Sichtoberfläche von dünnen Sandschichten insbesondere in einer gewachsenen, naturbelassenen Lagerstruktur, bzw. Farbstrukturierung gebildet wird. Derartige auf Unterlagen anzubringende Behänge bzw. Beläge können in den verschiedensten Lebensbereiche eingesetzt werden, zum Bedecken von Wänden, Böden, Decken in Gebäuden, oder Außenfassaden.

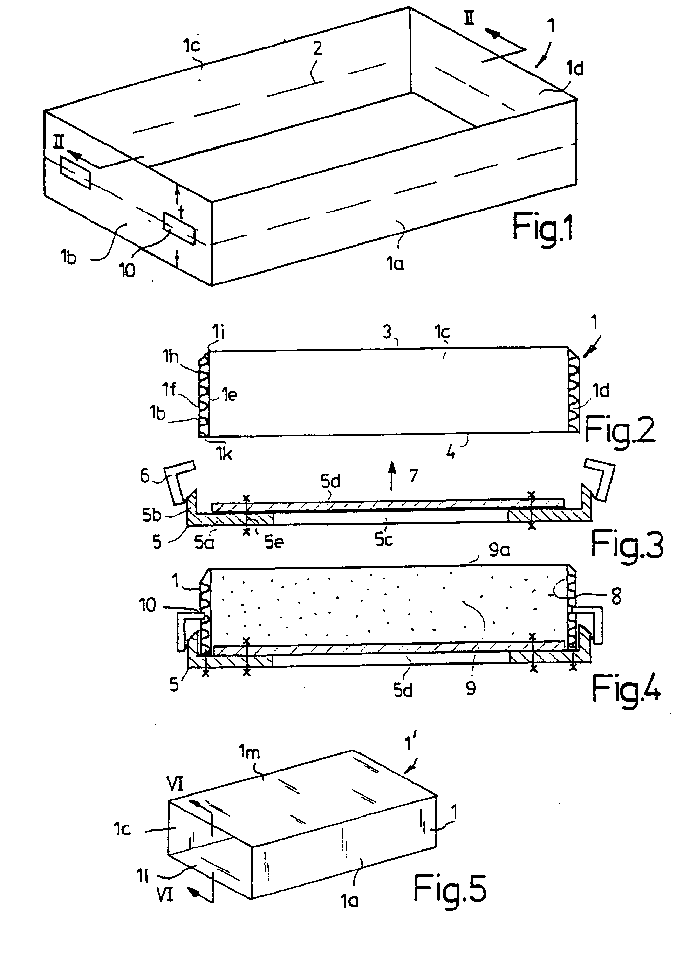

Die wichtigsten Gerätschaften, die zur Durchführung dieses Arbeitsverfahrens benutzt werden, sind Aufnahmen, die in Fig.1 und Fig.2 als Rahmen zu einer Zarge 1, in den Fig.5 und 6 als Rahmen zu einer Hülse 1' und in den Fig. 19, 20 und 21 als variable komplettierbare Teilrahmen 1" ausgestaltet sind. Bei allseitig geschlossen vorgestellten Oberflächen haben Zarge 1 und Hülse 1' eine Quaderform mit relativ schmalen ringsum laufenden Seitenwänden 1a bis 1d und zwei Hauptwänden 1L und 1m, die die Seitenwände verbinden. Bei der Zarge 1 sind die Hauptwände 1L und 1m als entfernt vorzustellen, bei der Hülse 1' fehlen die Seitenwände 1b und 1d oder 1a und 1c. Bei den Teilrahmen 1" sind je nach der Gestaltungsart Seitenwände 1a und 1b vorgesehen, die durch eine (1L unten) oder beide (1L unten und 1m oben) Hauptwände, sowie die Seitenwände 1b und 1d ergänzt werden. Bei der ersten Variante dieser Gestaltungsart werden die zunächst allein eingesetzten Seitenwände 1a und 1c nach dem Einpressen durch die danach eingeschobene untere Hauptwand 1L und die gegebenenfalls auch eingeschobene obere Hauptwand 1m so komplettiert, daß danach eine komplett handhabbare Aufnahme 1" entsteht. Bei einer zweiten Variante dieser Gestaltungsart sind die Seitenwände 1a und 1c von vornherein über die untere Hauptwand 1L verbunden. In diesem Fall braucht nur wenn nötig die obere Hauptwand 1m nachgeschoben zu werden.
Zwischen den bereits beim ersten Einpressen vorhandenen Wänden und den später zur Sicherung hinzugefügten Wänden bildet sich ein Aufnahmeraum 8 aus.

Die Zarge 1 stellt danach einen rechteckigen Rahmen dar und besteht aus vier aneinander anschließenden schmalen Seitenwänden 1a,1b,1c,1d. Die Seitenwände 1a-1d umrahmen, da die Hauptwände weggelassen sind, einen freien Durchgang von einer Ladeseite 3 zu einer Verschlußseite 4. Im Horizontalschnitt, angedeutet durch eine strichpunktierte Linie 2 in Fig.1, bilden die Wände ein Rechteck, mit einem Längenverhältnis der Wände 1a und 1c zu den Wänden 1b und 1d von etwa 2:1. Die Tiefe t bemißt sich auf etwa die Hälfte der Wandlänge der Wände 1b und 1d.

Die Seitenwände la-ld können massiv, beispielsweise aus Stahl, gebildet sein. Bei der notwendigen Steifigkeit hat die Zarge dann aber bereits unbeladen ein relativ großes Gewicht. Deshalb wird eine aus Fig.2 ersichtliche Konstruktion von Vorteil sein, bei der Innenplatten 1e und Außenplatten 1f zwischen sich eine Stützkonstruktion einschließen. Eine solche Stützkonstruktion kann beispielsweise aus gewellten oder gekanteten Blechen 1h bestehen. Fig.2 zeigt auch, daß die Zarge 1 an ihrer Ladeseite 3 nach innen spitz zulaufend, an der Verschlußseite 4 stumpf endend, ausgebildet ist.

Wie später beschrieben wird, dient die Zarge 1 der Aufnahme von Sand. Nachdem der Sand von der Ladeseite 3 in die Zarge 1 gefüllt ist, wird die von der Ladeseite 3 abliegende Verschlußseite 4 mittels eines in Fig.3 dargestellten Verschlußbodens 5 verschlossen. In Fig.3 ist der Verschlußboden 5 noch von der Zarge 1 getrennt dargestellt, um seinen Aufbau klarer erkennbar zu machen. Der Verschlußboden 5 besteht aus einer Bodenplatte 5a mit einem umlaufenden Kragen 5b, der über den Verschlußrand 1k der Zarge 1 schiebbar ist. Die Bodenplatte 5a weist ein großes zentrales Loch 5c auf. An dem Kragen 5b sind gelenkig Hakenklammern 6 vorgesehen, die in der Darstellung nach Fig.3 nur teilweise nach außen weggeklappt sind. An der Bodenplatte 5a ist innenseitig ein plattenförmiges Bodenteil 5d mittels nicht näher erläuterter Befestigungsmittel, beispielsweise lösbaren Schraubenverbindungen 5e, befestigte Ein Pfeil 7 deutet an, daß der Verschlußboden 5 gegen den Verschlußrand 1k schiebbar ist.

Fig.4 zeigt den Füllzustand der Zarge 1. Der Aufnahmeraum 8 der Zarge 1 ist mit Sand 9 gefüllt. Nun ist der Verschlußboden 5 gegen den Verschlußrand 1k der Zarge 1 gesetzt. Die Hakenklammern 6 sind in Ausnehmungen 10 der Seitenwände 1b,1d eingedrückt. Zusätzlich sind Befestigungsmittel, wie Schrauben 5f vorgesehen, die den Verschlußrand 1k mit der Bodenplatte 5a verbinden.

Die verwindungssteife, im Querschnitt rechteckige Hülse 1' nach Fig.5, hat etwa die gleiche Gesamtkörperform wie die Zarge 1. Bei ihr ist aber der Durchgang wesentlich kleiner, weil entweder, wie in der Zeichnung dargestellt, die Seitenwände 1b und 1d oder die Seitenwände 1a und 1c weggelassen sind. Bei der Hülse 1' nach Fig.5 schließen abwechselnd eine Seitenwand 1a, eine Hauptwand 1L, eine Seitenwand 1c und eine Hauptwand 1m aneinander an. Der Durchgang für den Sand verläuft damit durch die Hülse 1' über den von den weggelassenen Seitenwänden 1b und 1d oder 1a und 1c offengelassenen Freiraum.

Der Schnitt in Fig.6 zeigt, daß die bei liegender Hülse 1' unten befindliche Hauptwand 1L dem Verschlußrücken 5 der Zarge 1 nachgebildet ist. Diese als Verschlußboden 5 dienende Hauptwand 1L hat eine Bodenplatte 5a mit einem großen, zentralen Loch 5c. Auf der Bodenplatte 5a ist mittels nicht näher beschriebener Befestigungsmittel 5e ein Bodenteil 5d lösbar befestigt. Nach dem Lösen der Befestigungsmittel 5e ist die Bodenplatte 5d in der Hülse 1' anhebbar, um die Sandfüllung anzuheben. Davor muß allerdings die Hauptwand 1m entfernt worden sein. Diese ist dazu auf nicht beschriebene Weise abnehmbar gestaltet. Es sind noch zwei Abdeckungen 1n vorgesehen, mit denen die offene Ladeseite 3 und die offene Verschlußseite 4 verschlossen werden können. Die Befestigungsart ist nicht näher erläutert. Es ist wie in den anderen Befestigungsfällen ein Festschrauben oder Festklammern möglich.

Die Zarge 1 in ihrer Ausgestaltung nach den Fig.1 bis 4 wird, wie Fig.5 zeigt, von einer als Radlader 11 ausgebildeten Lademaschine gehandhabt. Der Ausleger 11a des Radladers 11 trägt dazu an seinem Steuerkopf 11b eine Trägervorrichtung 12, die zwei Greifarme 12a und 12b aufweist. Diese Greifarme 12a,b greifen mit Greifern 12c gegen Seitenwände, beispielsweise die Wände 1a und 1c. Des weiteren tragen die Greifarme 12a,b zwischen sich, in Schienen 12d verschieblich, den Verschlußboden 5.

So ausgerüstet fährt der Radlader 11 die Zarge 1 an eine Wandfläche oder Böschung 13 der Sandgrube heran, die eine naturgewachsene Lagerstruktur 13a aufweist. Der Radlader 11 drückt die Zarge 1 in die Wand hinein, wobei sich der Innenraum 8 der Zarge 1, wie bereits aus Fig.4 zu ersehen ist, mit Sand 9 in der unveränderten Lagerstruktur 13a füllt. Ist die Zarge 1 mit dem Sand gefüllt, dann wird der an der Verschlußbodenseite überstehende Sand abgerakelt. Dies kann auf verschiedene Weise erfolgen. Beispielsweise zieht eine nicht näher erläuterte Stellvorrichtung 12e den Verschlußboden 5 leicht schräg gegen den Verschlußrand 1k in seine Verschlußstellung. Danach werden die Hakenklammem 6 in die Ausnehmungen 10 eingeschwenkt und die Schraubverbindungen 5f angebracht.

Um sicher zu stellen, daß bei verschlußseitig geschlossener Zarge 1, bei ladeseitig noch fehlender Sicherung, ungewünschte Verschiebungen der Sandeinlage in der Zarge 1 auftreten, wird auch ladeseitig eine Klappe 14 wenigstens teilweise in Richtung eines Pfeiles 14a über die Ladeseite 3, vorzugsweise von unten her, geschoben. Die Klappe 14 ist in Fig.5 in der Offenstellung mit einem nur angedeuteten Schwenkmechanismus dargestellt.

Der nur beispielhaft zu verstehende Radlader 11 fährt nun die gefüllte Zarge 1 mit dem unten gelegenen Verschlußboden 5 in einen nicht dargestellten Vorratsraum oder unmittelbar in einen witterungsgeschützten Produktionsbereich, beispielsweise eine Werkhalle. Im Vorratsraum wird vorzugsweise ein Vorrat für Zeiten unsicherer Witterung angelegt.

Fig.8 zeigt die Handhabung der Hülse 1'. Der Steuerkopf 11b ist in diesem Fall mit einem Träger 12k versehen, der über ein Hülsenende 1o greift und dieses auf nicht näher beschriebene Weise festhält. Der Radlader kann nun die Hülse in verschiedenen Richtungen in die Grubenwand mit der gewachsenen Lagerstruktur eindrücken. Dies kann wie bei der Zarge 1 etwa senkrecht zur Grubenwandebene, oder auch in jeder beliebigen anderen Richtung, also nach unten wie in Fig.8 oder schräg nach oben erfolgen.

Ist die Hülse 1' nach dem Eindrücken in den Sand mit Sand gefüllt, dann werden die offenen Seiten mit den Deckeln In abgeschlossen. Nun kann die Hülse 1' bedenkenlos so gekippt werden, daß die Bodenplatte 5a unten zu liegen kommt. Der Radlader 11 fährt die gefüllte Hülse 1 ebenso wie die Zarge 1 in einen Vorratsraum oder in einen Produktionsbereich in der Werkhalle.

Das Hineindrücken eines Rahmens, ganz gleich ob Zarge 1 oder Hülse 1' in eine Wandfläche 13 einer Sandgrube mittels des Auslegers 11a eines Radladers 11 kann zu Problemen führen, wenn der Radlader 11 nicht in der Lage ist, den Druckvorgang ruhig genug auszuführen. Für diesen Fall ist eine hydraulische Eindrückvorrichtung 30 vorgesehen, die am Ausleger 11a angeordnet ist. Die Eindrückvorrichtung 30 besteht aus einer Stützplatte 31, die vor sich mittels hydraulischer Preßstempel 32 eine Drückplatte 33 trägt, an der ein Rahmen 1,1' festlegbar ist. Zum Füllen des Rahmens 1,1' fährt der Radlader 11 diesen gegen die Wandfläche 13. Nun drücken die Preßstempel 32 die Drückplatte 33 und damit den Rahmen 1,1' in die Wandfläche 13 hinein. Dieser Vorgang verläuft erschütterungsfrei ab, und die Sandstruktur bleibt erhalten. Um ein ungewolltes Lösen des Sandes in dem gefüllten Rahmen zu vermeiden, ziehen hydraulische Zugstempel 34 den Verschlußboden 5 vor die hintere Seite des Rahmens 1,1'. Ladeseitig kann, wie in Fig.8 beschrieben, die Klappe 14 vor die Ladeseite 3 geschwenkt werden.

Fig. 15 zeigt einen Rahmen 1 in Zargenform, in den abweichend von einer gewachsenen, natürlichen Sedimentstruktur einer Sandgrube eine künstliche Schichtung von Sanden verschiedener Farbe vorgenommen ist. Dazu sind beispielsweise Bleche 40,41,42 verschiedener Form in die Zarge 1 eingelegt, zwischen die Sande verschiedener Farbe geschüttet sind. Fig. 16 zeigt ein Beispiel, bei dem zur Erzeugung einer künstlichen Schichtung Sande verschiedener Farbe durch Rühren, Pusten, Schieben odgl. miteinander vermengt werden zur Bildung künstlicher Farbstrukturen. Fig. 17 zeigt eine gemischt künstliche und gewachsene Farbstrukturschichtung. In diesem Fall sind in die Zarge 1 Blöcke oder Klumpen 43 in gewachsener Sedimentstruktur eingebracht. Die Hohlräume 44 zwischen den Blöcken oder Klumpen sind dann mit lockeren Sanden ausgefüllt. Nach dem Herstellen der Strukturmuster in der Zarge 1 werden die Füllungen eingeschwemmt und sind verwendbar wie jede andere Füllung.

Die künstliche Bildung von Farbstrukturierungen macht es möglich, auch größere, viel längere Zargen einzusetzen, wie sie in Fig. 18 angedeutet sind. Hat eine gut maschinell handhabbare Zarge vielleicht Querschnittsabmessungen von ca.1,20 m X 0.80 m, so kann eine Zarge 1 für künstliche Farbstrukturierungen 2 und mehr Meter lang gemacht werden.

In der Werkhalle befindet sich eine Bearbeitungsvorrichtung 15, wie sie in den Fig.9 bis 12 dargestellt ist. Die Bearbeitungsvorrichtung 15 weist am Boden 16 abgestützte Lagerblöcke 17 und eine ebenfalls am Boden abgestützte hydraulische Hebevorrichtung 18 auf. Auf die Lagerblöcke 17 wird die mit Sand 9 gefüllte Zarge 1 oder Hülse 1' mit der Bodenplatte 5a aufgesetzt. Dort wird sie mit dem Boden 16 über eine zugsichere Verbindung 19 verbunden. Die Hebevorrichtung 18 greift durch das Loch 5c in der Bodenplatte 5a hindurch bis zum Bodenteil 5d. In dieser Vorrichtung 15 erfolgt das schichtweise Herstellen der Behänge bzw. Beläge.

Das Arbeitsverfahren wird am Beispiel der Herstellung einer Bahn, eines Behanges oder Belages erläutert. Es wird angenommen, daß bei der Darstellung in Fig.9 bereits mehrere Bahnen von Behängen oder Belägen mit Sandschichten 9b aus dem Sandinhalt der Zarge 1 oder Hülse 1' hergestellt worden sind. Bei der Herstellung eines Behanges oder Belages wird der Zarge 1 oder Hülse 1' immer eine Sandschicht 9b entnommen. Nach der Herstellung eines Behanges oder Belages und dessen Entnahme ist aus der Zarge 1 stets die oberste Sandschicht 9b entfernt. Der Sand reicht deshalb nicht mehr bis zum Laderand 1i. Mittels der Hebevorrichtung 18 wird nun der Bodenteil 5d angehoben, bis die obere Sandfläche 9a wieder mit dem Laderand 1i abschließt. Nun wird der Sand 9 mittels einer Sprengleranlage mit mehreren Düsen 21 angefeuchtet. Danach fährt ein an einer Führungsschiene 22a geführter Rakel 22 über die Sandfläche 9a und streicht diese glatt.

Fig.9 zeigt, wie im weiteren Verfahrensablauf eine als poröse, flexible Gewebebahn ausgebildete Stützschicht 23 von einer Vorratsrolle 23a abgerollt und auf die Sandfläche 9a aufgelegt wird. Die Stützschicht 23 kann aber auch unmittelbar an der Sandfläche 9a gebildet werden, indem mit Fasern durchsetzter Klebstoff aufgestrichen, aufgerollt oder aufgegossen wird. Nun wird, wenn wie im Ausführungsbeispiel eine als Bahn ausgebildete Stützschicht 23 eingesetzt wird, aus Dosierern 24 ein Klebstoff auf die Stützschicht 23 aufgesprüht, aufgestrichen, aufgerollt oder aufgegossen. Die Viskosität des Klebstoffes ist dabei so eingestellt, daß dieser durch die Stützschicht 23 in den Sand 9 fließt und dabei gleichmäßig um eine gewisse Tiefe, von beispielsweise 1 bis 2 mm, in den Sand 9 eindringt und die mit der Stützschicht 23 verklebende Sandschicht 9b bildet.

Bei einer Schrnalseitentiefe t von beispielsweise 60 cm lassen sich aus einer Zarge 1 oder Hülse 1' ca. 100 bis 120 Behangs- oder Belagsbahnen herstellen.
Zum Aushärten des Klebstoffes werden beispielsweise Infrarot-Strahler 25 eingeschaltet.

Ist der Klebstoff abgebunden, dann wird, wie Fig.11 zeigt, die mit der Sandschicht 9b verklebte Stützschicht 23b von der Stützschicht 23 an der Rolle 23a abgeschnitten. Die mit einer Sandschicht 9b verklebte Stützschicht 23b wird nun als fertige Behangs- oder Belagsbahn 23c, beispielsweise mittels einer Nagelleiste 26, deren Nägel 26a durch die Stützschicht 23 greifen, abgehoben und auf eine in Fig.9 angedeutete Halterung 27 gehängt. Die der Reihe nach hintereinander aufgereihten Behangs- oder Belagsbahnen 23b können nebeneinander verarbeitet werden, wobei sich bei richtiger Zusammenstellung ein nahtloser Übergang ergibt.

Fig. 13 zeigt das Anbringen einer Versteifungsschicht 46 auf der Stützschicht 23. Es ist eine Gießvorrichtung 47 vorgesehen, in die ein Brei oder Kuchen aus Sand und Bindemittel eingegeben wird. Dieser Brei oder Kuchen wird auf die Stützschicht 23 aufgegossen. Nach dem Aushärten ist die Versteifungesschicht 46 entsprechend den Beigaben mehr oder weniger steif. Mit Hilfe des Rakels 48 kann die Versteifungsschicht 46 im noch geschmeidigen Zustand abgezogen werden.

Es ist möglich, die so gewonnenen Platten nach dem Abbinden maschinell zu verpressen, wobei eine Zugabe von Wärme förderlich ist. Zusätzlich kann die sichtbare Oberfläche noch durch ein Versiegeln geglättet werden.

Mit Hilfe des Verfahrens ist es möglich, auch Böden aus großen Entfernungen heranzuholen, so auch aus Übersee.

Fig. 19 zeigt sehr schematisch in Draufsicht Gestaltungsarten der Teilrahmen 1" in der ersten (1"a) und der zweiten (1"b) Variante,die in den Fig. 20 und 21 deutlich erkennbar sind. Diese Gestaltungarten können sich bei bestimmten gewachsenen Sandschichtstrukturen als geeignet erweisen. Bei der Variante 1 "a (Fig. 20) werden bei dem Beginn des Einpressens zunächst nur die Seitenwände 1a und 1 eingesetzt. Es ist wie in Fig. 14 eine hydraulische Eindrückvorrichtung 30 vorgesehen, die am Ausleger 11a angeordnet ist. Die Eindrückvorrichtung 30 besteht aus der Stützplatte 31, die vor sich mittels der hydraulischen Preßstempel 32 die Drückplatte 33 trägt, an der die Seitenwände 1a und 1c festgelegt sind. Zum Füllen des Aufnahmeraumes 8 zwischen den Seitenwänden 1a und 1c fährt der Radlader 11 diesen gegen die Wandfläche 13 der Sandgrube. Nun pressen die Preßstempel 32 die Drückplatte 33 und damit die Seitenwände 1a und 1c in die Wandfläche 13 hinein. Dieser Vorgang läuft, weil zunächst nur die Seitenwände 1a und 1c vorfahren, besonders erschütterungsfrei ab, und die Sandstruktur bleibt erhalten.

Bei der zweiten Variante (Fig. 21) sind die untere Hauptwand 1 L und die Seitenwände 1a und 1c fest miteinander verbunden; sie bilden auf diese Weise einen kohlenschaufelartigen Teilrahmen 1"b mit U-förmigem Querschnitt. Die Seitenwände 1a und 1c sind ähnlich hoch wie bei den anderen Rahmen und haben beispielsweise eine Höhe von ca. 60 cm. In diesem Fall wird der Teilrahmen 1"b zunächst in den Sand eingepreßt.

Um ein ungewolltes Lösen des Sandes in dem gefüllten Rahmen zu vermeiden, ziehen hydraulische Zugstempel 51 im Fall der ersten Variante 1"a die untere Hauptwand 1L in den Sand ein. Sowohl bei der Variante 1 "a als auch bei der Variante 1"b kann zusätzlich die obere Hauptwand 1m eingezogen werden. Wie in Fig. 14 werden danach die Seitenwand 1d und die Seitenwand 1b vor die noch offenen Seiten der Aufnahmen 1 "a und 1"b geschoben, wenn dies gewünscht wird. Bei den Varianten 1" wurde auf die Wandbezeichnungen der Fig. 1 mit der Zargengestaltung zurückgegriffen. Je nachdem, ob bei den Gestaltungen der Aufnahmen 1" von der Zargenform (1) oder von der Hülsenform (1') ausgegangen wird, sind bei der einen Form oder anderen Form gewählte Bezeichnungen zu verwenden.

## Patentansprüche

1. Arbeitsverfahren zur Herstellung von verfestigten Sandschichten (9b) mit gewünschten Strukturierungen und zum Aufbringen als Sichtbeläge auf Wände, Decken oder Böden, wobei die verfestigten Sandschichten mit einer Stützschicht (23) hinterlegt sind, **gekennzeichnet durch** folgende Verfahrensschritte a. bis e.:
a. es wird in eine Aufnahme (1,1',1"), die einen Aufnahmeraum (8) vorgibt, Sand (9) mit einer gewünschten Strukturierung eingebracht,
b. die Aufnahme (1,1',1") wird nach dem Aufnehmen des Sandes (9) so gehandhabt, daß der Sand (9) in seiner Strukturierung darin gesichert wird,
c. die so gesicherte Sandfüllung wird in der Aufnahme zur weiteren Verarbeitung verfügbar gehalten,
d. es werden jeweils schichtweise Schichtbahnen aus Sandschicht (9b) und Stützschicht (23) gebildet, indem auf eine geglättete Sandfläche (9a) am geöffneten oberen Rand (1i) der Aufnahme (1,1',1") die Stützschicht (23) aufgelegt wird und die Stützschicht (23) mit einem zumindest die obere Sandschicht (9b) verfestigenden Binde- bzw. Klebmittel in Kontakt gebracht wird,
e. die jeweils fertiggestellte Schichtbahn (23b), bestehend aus der Sandschicht (9a) und der Stützschicht (23), die gegebenenfalls zusätzlich **durch** eine Versteifungsschicht (46) ergänzt sein kann, wird abgehoben und der Weiterverwendung oder Weiterverarbeitung zugeführt;
oder **durch** folgende Verfahrensschritte A. und B.:
A. es werden jeweils schichtweise Schichtbahnen aus einer naturgewachsenen Sandschicht (9) einer Sand- oder Kiesgrube und einer Stützschich (23) gebildet, indem auf eine im wesentlichen naturbelassene Sandfläche einer Sand- oder Kiesgrube eine Stützschicht aufgelegt und die Stützschicht mit einem die obere Sandschicht verfestigenden Binde- bzw. Klebemittel, in Kontakt gebracht wird, und
B. die jeweils verfestigte Schichtbahn, bestehend aus der Sandschicht und der Stützschicht, abgehoben wird und einem Verpressen ausgesetzt wird;
und **durch** folgende Verfahrensschritte:
- jeweils Hinterlegen der Schichtbahn mit einer porösen und flexiblen Stützschicht (23),
- Versiegeln die Sichtflächen der Schichtbahnen und
- Aufbringen der schichtweise gewonnenen Schichtbahnen (23b) als Sichtbeläge auf Wänden, Decken oder Böden in Gebäuden oder auf Außenfassaden und Bedecken der Wände, Decken, Böden oder Außenfassaden als Sichtbeläge, wobei die Sichtoberfläche von dünnen Sandschichten insbesondere in einer gewachsenen, naturbelassenen Lagerstruktur (13a) bzw. Farbstrukturierung gebildet ist.

2. Verfahren nach Anspruch 1, **dadurch gekennzeichnet, dass** die Versteifungsschicht (46) aus einem Gemisch von Sand und einem Bindemittel gebildet wird.

3. Verfahren nach Anspruch 1, **dadurch gekennzeichnet, dass**
die Schichtbahn (23b) nach ihrem Abnehmen maschinell verpreßt wird.

4. Verfahren nach einem der vorhergehenden Ansprüche, **dadurch gekennzeichnet, dass** die Schichtbahn (23b) einer Wärmebehandlung ausgesetzt werden.

5. Verfahren nach einem der vorhergehenden Ansprüche, **dadurch gekennzeichnet, dass** die Schichtbahn (23b) nach ihrem Abnehmen maschinell unter Wärmeeinwirkung, verpreßt wird.

6. Verfahren nach einem der vorhergehenden Ansprüche, **dadurch gekennzeichnet, dass** der Sand mittels der Aufnahme (1,1',1") von natürlichen Sedimentschichten aus Sand- bzw. Kiesgruben entnommen wird, indem die Aufnahme (1,1',1") in die Wandfläche (13) der Grube, die die gewünschte Strukturierung aufweist, eingedrückt wird, wobei sich bei in die Wandfläche (13) hineindrückender Aufnahme (1,1',1") deren Aufnahmeraum (8) füllt.

7. Verfahren nach Anspruch 6, **dadurch gekennzeichnet, dass** die Aufnahme (1,1',1") bei stillstehender Lademaschine während des Füllvorganges hydraulisch in die Wandfläche(13) eingedrückt wird.

8. Verfahren nach Anspruch 6, **dadurch gekennzeichnet, dass**
die Aufnahme (1,1',1") nach dem Ausfüllen des Füllraumes (8) mit natürlichen Sedimentschichten, noch bevor ihre räumliche Stellung so verändert wird, daß sich die Sandfüllung verschieben könnte, zur Bildung einer die Füllung des Füllraumes (8) in ihrer Struktur sichernden Raumbegrenzung an den noch offenen, gefährdeten Umhüllungsflächen des Aufnahmeraumes (8) umschlossen wird.

9. Verfahren nach einem der vorhergehenden Ansprüche, **dadurch gekennzeichnet, daß** die Sandfüllung (9) in der Aufnahme (1,1',1") nach dem Abheben einer Sandschicht (9b), die mittels des Klebstoffes und/oder Bindemittels mit der Stützschicht (23) verklebt ist, so verschoben wird, daß die Sandfläche (9a) wieder den Rand (1i) der Aufnahme (1, 1',1"), von dem die Sandschicht (9b) entnommen ist, erreicht.

10. Vorrichtung zur Durchführung des Verfahrens nach einem oder mehreren der Ansprüche 1 bis 9 umfassend die Verfahrensschritte a. bis e., **dadurch gekennzeichnet, dass** die Vorrichtung, eine Aufnahme (1,1',1"), eine Bodenplatte (5a) und ein innerhalb der Aufnahme (1,1',1") befindliches Bodenteil (5d) umfasst, die Aufnahme (1,1',1") aus Wänden besteht, die wenigstens innenseitig überwiegend glattflächig ausgebildet sind, wobei die Aufnahme (1,1',1") einen Aufnahmeraum (8) für eine Sandfüllung vorgibt, wobei die Aufnahme (1,1',1") während des Füllvorganges in der Füllrichtung offen und nach dem Füllvorgang während des Transports, der Lagerung und in der Produktion im unteren und seitlichen Bereich geschlossen ist und wobei die im Produktionsbereich unten befindliche Bodenplatte (5a) so ausgebildet ist, dass das Bodenteil (5d) in der Aufnahme (1,1',1") anhebbar ist, damit die Sandfüllung anhebbar ist.

11. Vorrichtung nach Anspruch 10, **dadurch gekennzeichnet, dass** der innerhalb der Aufnahme (1,1',1") verschiebliche Bodenteil (5d) hydraulisch von unten nach oben anhebbar ist.

12. Vorrichtung nach einem der Ansprüche 10 oder 11, **dadurch gekennzeichnet, dass** die Aufnahme (1) als Rahmen in Form einer rechteckigen Zarge (1) eine großflächige Ladeöffnung aufweist, weil die Zarge (1) nur aus aneinander anschließenden schmalen Seitenwänden (1a-1d) besteht.

13. Vorrichtung nach einem der Ansprüche 10 oder 11, **dadurch gekennzeichnet, dass** die Aufnahme (1') als Rahmen in Form einer rechteckigen Hülse (1') eine kleinflächige Ladeöffnung aufweist, weil die Hülse (1') aus wechselnd aneinander anschließenden schmalen Seitenwänden (1a,1c, bzw.1b,1d) und großflächigen Hauptwänden (11, 1m) besteht.

14. Vorrichtung nach einem der Ansprüche 10 oder 11, **dadurch gekennzeichnet, dass** die Aufnahme (1"a) wenigstens aus zwei auf Abstand angeordneten parallelen Seitenwänden (1a,1c) besteht, die gleichzeitig in eine Sandschicht (13) einpreßbar sind, und aus einer Boden- und gegebenfalls Deckwand (1L,1m), die zur Begrenzung des Aufnahmeraumes (8) nach dem Einpressen der Seitenwände (1a,1c) ebenfalls in die Sandschicht (13) einfahrbar sind.

15. Vorrichtung nach einem der Ansprüche 10, 11 oder 14, **dadurch gekennzeichnet, dass** die Aufnahme (1"b) einen U-fdrmigen Querschnitt mit parallelen Seitenwänden (1a,1c) und einer diese verbindenden Bodenwand (1L) besteht.

16. Vorrichtung nach einem der Ansprüche 12 bis 15, **dadurch gekennzeichnet, dass** die beim Einpressen hintere Seite mittels einer Wand (1c,5) abgeschlossen wird und auch die beim Einpressen vordere Seite gegebenenfalls wenigstens teilweise mittels eines Deckelteiles (1b,14) abgedeckt wird.

17. Bearbeitungsvorrichtung (15) aufweisend die Vorrichtung nach einem der Ansprüche 10 bis 16, wobei die gefüllte Aufnahme (1,1',1") im Produktionsbereich mit unten befindlicher Bodenplatte (5a) in die Bearbeitungsvorrichtung (15) eingeführt ist, die Bearbeitungsvorrichtung (15) einen Rakel (22) aufweist, mit der die obere Sandfläche (9a) am oben offenen Aufnahmerand (1i) glattziehbar ist, und in die Bearbeitungsvorrichtung (15) zumindest eine bahnenförmige Stützschicht (23) bereitgehalten ist, die auf die glattgezogene Sandfläche (9a) aufziehbar sind und auf die der in den Sand (9) eindringende Klebstoff aufbringbar ist.

18. Bearbeitungsvorrichtung (15) nach Anspruch 17, **dadurch gekennzeichnet, dass** zur Vorgabe der Dicke des auf die Stützschicht (23) aufzubringenden kuchen- oder breiförmigen Materials der Versteifungsschicht (46) der Rakel (48) in einer vorgegebenen Höhe über diese hinwegziehbar ist.

19. Vorrichtung nach einem der Ansprüche 10 bis 16, **dadurch gekennzeichnet, dass** die Aufnahmewände (1a-d und 11,1m) doppelwandig mit einer zwischengefügten Versteifung (1h) ausgebildet sind.

20. Vorrichtung nach Anspruch 19, **dadurch gekennzeichnet, dass** die Versteifung (1h) aus gekantetem oder gewelltem, metallischem Material besteht.

21. Verfahren nach einem der Ansprüche 1 bis 8, **dadurch gekennzeichnet, dass** der Klebstoff bzw. das Bindemittel aufsprüh-, aufstreich-, aufroll- oder aufgießbar ist.

22. Wände, Decken oder Böden in Gebäuden oder auf Außenfassaden versehen mit verfestigten Sandschichten hergestellt nach dem Verfahren nach zumindest einem der Ansprüche 1 bis 9 in Form von mehreren Schichtbahnen als Belag, wobei die Schichtbahnen gewonnen sind durch schichtweises Abtragen von naturgewachsenen Sandschichten einer Sand- oder Kiesgrube und wobei die Schichtbahnen mit einer porösen und flexiblen Stützschicht (23) hinterlegt sind und die Sichtflächen der Schichtbahnen versiegelt sind.

## Claims

1. Working process for the production of consolidated sand layers (9b) having desired structures and for the application as visible coverings on walls, ceilings or floors, where the consolidated sand layers are deposited with a supporting layer (23), **characterized by** the following process steps a. to e.:
a. sand (9) having a desired structure is introduced into a receptacle (1, 1', 1") having a receptacle space (8),
b. the receptacle (1, 1', 1"), after receiving the sand (9), is handled in such a manner that the sand (9) with its structure is retained therein,
c. the sand filling thus retained is kept available in the receptacle for further processing,
d. in each case, layer sheets made of the sand layer (9b) and the supporting layer (23) are formed in a layered manner by applying the supporting layer (23) onto a smooth sand surface (9a) at the open upper edge (1i) of the receptacle (1, 1', 1"), and by bringing the supporting layer (23) in contact with at least one binding agent or adhesive agent which consolidates at least the upper sand layer (9b),
e. the finished layer sheet (23b), consisting of the sand layer (9a) and the supporting layer (23), which can optionally be completed additionally by a reinforcing layer (46), is lifted off in each case, and supplied for further use or further processing;
or by the following process steps A. and B.:
A. each layer sheets are formed in a layered manner from a naturally accrued sand layer (9) of a sand pit or gravel pit and a supporting layer (23), by applying a supporting layer onto an essentially natural sand surface of a sand pit or gravel pit, and by bringing the supporting layer in contact with a binding agent or adhesive agent which consolidates the upper sand layer, and
B. by lifting off the consolidated layer sheet, which consists of the sand layer and of the supporting layer, in each case, and exposing it to compression;
and by the following process steps:
- depositing each of the layer sheets with a porous and flexible supporting layer (23),
- sealing the visible surfaces of the layer sheets, and
- depositing the layer sheets (23b), which are obtained in layers, as visible coverings on walls, ceilings or floors in buildings or on the exterior facades, and covering the walls, ceilings, floors or exterior facades as visible coverings, wherein the visible surface is formed from thin sand layers particularly in an accrued, natural bed structure (13a) or color structure.

2. Method according to claim 1, **characterized in that** the reinforcing layer (46) is formed of a mixture of sand and a binder.

3. Method according to claim 1, **characterized in that** the layer sheet (23b) is mechanically compressed after its removal.

4. Method according to one of the preceding claims, **characterized in that** the layer sheet (23b) is subjected to a heat treatment.

5. Method according to one of the preceding claims, **characterized in that** the layer sheet (23b) is mechanically compressed after its removal under the influence of heat.

6. Method according to one of the preceding claims, **characterized in that** the sand is removed from natural sediment layers in sand pits or gravel pits by means of the receptacle (1, 1', 1") by pressing the receptacle (1, 1', 1") into a wall surface (13) of the pit which has the desired structure, wherein the receptacle space (8) of the receptacle (1, 1', 1") is filled when the receptacle is pressed into the wall surface (13).

7. Method according to claim 6, **characterized in that** the receptacle (1, 1', 1") is hydraulically pressed into the wall surface (13) during the filling process while the loading machine is at a standstill.

8. Method according to claim 6, **characterized in that** the receptacle (1, 1', 1") after filling the receptacle space (8) with natural sediment layers - and before its position is changed such that the sand filling could shift - the receptacle space (8) is enclosed on the still open and endangered wrapping surfaces to build a structure securing enclosure for the filling of the receptacle space (8).

9. Method according to one of the preceding claims, **characterized in that** the sand filling (9) in the receptacle (1, 1', 1") after lifting off a sand layer (9b) that is bonded to the support layer (23) by means of the binder and/or adhesive, is shifted in a manner such that the sand surface (9a) once again reaches the edge (1i) of the receptacle (1, 1', 1"), from which the sand layer (9b) was removed.

10. Device for carrying out the method according to one or more of claims 1 to 9, comprising the process steps a. to e. **characterized in that** device comprises a receptacle (1,1',1"), a base plate (5a) and a base section (5d) situated within the receptacle (1, 1', 1"), the receptacle (1,1',1") comprising walls that are predominantly smooth at least on the inner side, wherein the receptacle (1,1',1") defines a receptacle space (8) for a sand filling, wherein the receptacle (1, 1', 1") is open in the filling direction during the filling process and closed in the lower region and the lateral region after the filling process, during its transport, storage and in the production, and wherein a base plate (5a) at the bottom of the production area during the production process is realized in such a way that the base section (5d) situated within the receptacle (1, 1', 1") can be raised in the receptacle (1, 1', 1") in order to raise the sand filling.

11. Device according to claim 10, **characterized in that** the base section (5d) that can be displaced within the receptacle (1, 1', 1") is hydraulically raised from bottom to top.

12. Device according to one of claims 10 or 11, **characterized in that** the receptacle (1) comprises as a frame in the form of a rectangular casing (1) a large-surface loading opening because the casing (1) only consists of narrow side walls (1a-1d) that adjoin one another.

13. Device according to one of claims 10 or 11, **characterized in that** the receptacle (1') comprises as a frame in the form of a rectangular sleeve (1') a small-surface loading opening because the sleeve (1') consists of narrow side walls (1a, 1c and 1b, 1d) and large-surface main walls (11, 1m) that alternately adjoin one another.

14. Device according to one of claims 10 or 11, **characterized in that** the receptacle (1"a) consists of two parallel side walls (1a, 1c) that are spaced apart from one another, which can be simultaneously pressed into a sand layer (13), and of a bottom wall and, optionally a cover wall (1L, 1m) that can also be pressed into the sand layer (13) in order to limit the receptacle space (8) after pressing in the side walls (1a, 1c).

15. Device according to one of claims 10, 11 or 14, **characterized in that** the receptacle (1"b) has a U-shaped cross section with parallel side walls (1a, 1c) and a bottom wall (1L) that connects these side walls.

16. Device according to one of claims 12 to 15, **characterized in that** the side which is at the rear is closed by means of a wall (1c, 5) while pressing and the side which is at the front while pressing is optionally also covered at least partially by means of a cover part (1b, 14).

17. Processing device (15) comprising the device according to one of claims 10 to 16, wherein the filled receptacle (1, 1', 1") in the production area with the base plate (5a) situated on the bottom is inserted into the processing device (15), wherein the the processing device (15) comprises a blade (22) for smoothing the upper sand surface (9a) at the open edge (1i), and wherein in the processing device (15) at least one strip-shaped support layer (23) is provided to be applied onto the smoothed sand surface (9a) and on to which the adhesive to penetrate into the sand (9) is applicable.

18. Processing device (15) according to claim 17, **characterized in that** the thickness of the cake-like or pasty maternal of the reinforcing layer (46) to be applied onto the support layer (23) is defined by moving the blade (48) over the reinforcing layer at a predetermined height.

19. Device according to one of claims 10 to 16, **characterized in that** the walls of the receptacle (1a-d, 11, 1m) are realized in the form of double walls with a reinforcement (1h) arranged in between.

20. Device according to claim 19, **characterized in that** the reinforcement (1h) consists of angled or corrugated metallic material.

21. Method or device according to one of the claims 1 to 8, **characterized in that** the adhesive or the binder is applied by means of spraying, brushing, rolling or pouring.

22. Walls, ceilings and floors in buildings or on exterior facades provided with consolidated sand layers produced by the method according to at least one of claims 1 to 9 in the form of a plurality of layer sheets as covering, in which the layer sheets are produced by layer-wise removal of naturally grown layers of sand of a sand pit or gravel pit, and wherein the layer sheets are deposited with a porous and flexible support layer (23) and the visible surfaces of the layer sheets are sealed.

## Revendications

1. Procédé pour fabriquer des couches de sable (9b) consolidées ayant les structurations voulues et pour les appliquer sur des murs, plafonds ou sols sous la forme de revêtements apparents, dans lequel les couches de sable consolidées sont déposées avec une couche support (23), **caractérisé par** les étapes de procédé a. à e. suivantes :
a. on introduit du sable (9) ayant une structuration voulue dans un réceptacle (1, 1', 1") qui définit un espace de réception (8),
b. le réceptacle (1, 1', 1") est manipulé après la réception du sable (9) de sorte que le sable (9) y soit sécurisé dans sa structuration,
c. le chargement de sable ainsi sécurisé est maintenu disponible dans le réceptacle aux fins d'une transformation ultérieure,
d. on forme, respectivement par couche, des bandes de couches constituées d'une couche de sable (9b) et d'une couche support (23) en appliquant la couche support (23) sur une surface de sable (9a) lissée sur le bord supérieur ouvert (1i) du réceptacle (1, 1', 1") et en mettant en contact la couche support (23) avec un agent liant ou collant consolidant au moins la couche de sable (9b) supérieure,
e. la bande de couches (23b) respectivement confectionnée, constituée de la couche de sable (9a) et de la couche support (23), laquelle peut être le cas échéant en plus complétée par une couche de renforcement (46), est soulevée et amenée à l'utilisation ultérieure ou à la transformation ultérieure ;
ou par les étapes de procédé A. et B. suivantes :
A. on forme, respectivement par couche, des bandes de couches constituées d'une couche de sable (9) à l'état naturel d'une carrière de sable ou de gravillons et d'une couche support (23) en appliquant une couche support sur une surface de sable sensiblement à l'état naturel d'une carrière de sable ou de gravillons et en mettant en contact la couche support avec un agent liant ou collant consolidant la couche de sable supérieure, et
B. la bande de couches respectivement consolidée, constituée de la couche de sable et de la couche support est soulevée et soumise à une compression ;
et par les étapes de procédé suivantes :
- respectivement dépôt de la bande de couches avec une couche support (23) poreuse et flexible,
- scellement des surfaces apparentes des bandes de couches et
- application des bandes de couches (23b), obtenues couche par couche, sous forme de revêtements apparents sur des murs, plafonds ou sols dans des bâtiments ou sur des façades extérieures et recouvrement des murs, plafonds, sols ou façades extérieures sous la forme de revêtements apparents, la surface apparente des couches de sable minces étant façonnée en particulier dans une structure en strates (13a) ou une structuration colorée, formée, à l'état naturel.

2. Procédé selon la revendication 1, **caractérisé en ce que** la couche de renfort (46) est formée à partir d'un mélange de sable et d'un liant.

3. Procédé selon la revendication 1, **caractérisé en ce que** la bande de couches (23b) est comprimée avec une machine après son retrait.

4. Procédé selon l'une des revendications précédentes, **caractérisé en ce que** la bande de couches (23b) est soumise à un traitement thermique.

5. Procédé selon l'une des revendications précédentes, **caractérisé en ce que** la bande de couches (23b) est comprimée avec une machine après son retrait sous l'action de la chaleur.

6. Procédé selon l'une des revendications précédentes, **caractérisé en ce que** le sable est débarrassé des couches de sédiments naturels provenant des carrières de sable ou de gravillons au moyen du réceptacle (1, 1', 1") en enfonçant le réceptacle (1, 1', 1") dans la surface de paroi (13) de la carrière qui présente la structuration voulue, l'espace de réception (8) du réceptacle (1, 1', 1") s'enfonçant dans la surface de la paroi (13) se remplissant alors.

7. Procédé selon la revendication 6, **caractérisé en ce que** le réceptacle (1, 1', 1") est enfoncé hydrauliquement dans la surface de la paroi (13) pendant l'opération de remplissage quand la machine de chargement est à l'arrêt.

8. Procédé selon la revendication 6, **caractérisé en ce que** le réceptacle (1, 1', 1") est entouré pour former une délimitation spatiale sécurisant le chargement de l'espace de chargement (8) dans sa structure au niveau des surfaces d'enveloppement de l'espace de réception (8) menacées et encore ouvertes, après le remplissage de l'espace de chargement (8) avec des couches de sédiments naturels, mais encore avant que sa position spatiale ne soit modifiée de telle sorte que le chargement de sable puisse glisser.

9. Procédé selon l'une des revendications précédentes, **caractérisé en ce que** le chargement de sable (9) dans le réceptacle (1, 1', 1") est glissé, après le soulèvement d'une couche de sable (9b) qui est collée au moyen de la colle et/ou du liant avec la couche support (23), de sorte que la surface de sable (9a) atteigne de nouveau le bord (1i) du réceptacle (1, 1', 1") dont est retirée la couche de sable (9b).

10. Dispositif permettant de réaliser le procédé selon l'une ou plusieurs des revendications 1 à 9, comprenant les étapes de procédé a. à e., **caractérisé en ce que** le dispositif comprend un réceptacle (1, 1', 1"), une plaque de fond (5a) et une partie fond (5d) se trouvant à l'intérieur du réceptacle (1, 1', 1"), le réceptacle (1, 1', 1") se composant de parois qui sont principalement conçues sous forme de surfaces lisses au moins sur leurs faces internes, le réceptacle (1, 1', 1") définissant un espace de réception (8) pour un chargement de sable, le réceptacle (1, 1', 1") étant ouvert dans le sens du remplissage pendant l'opération de remplissage et fermé dans la zone inférieure et latérale après l'opération de remplissage pendant le transport, le stockage et au cours de la production, et la plaque de fond (5a) se trouvant en bas dans la zone de production étant conçue de sorte que la partie fond (5d) dans le réceptacle (1, 1', 1") soit amovible afin que le chargement de sable soit amovible.

11. Dispositif selon la revendication 10, **caractérisé en ce que** la partie fond (5d) pouvant être coulissée à l'intérieur du réceptacle (1, 1', 1") est amovible hydrauliquement de bas en haut.

12. Dispositif selon l'une des revendications 10 ou 11, **caractérisé en ce que** le réceptacle (1) présente une ouverture de chargement de grande surface à titre de cadre sous la forme d'une caisse (1) rectangulaire car la caisse (1) ne se compose que de parois latérales (1a-1d) étroites adjacentes les unes aux autres.

13. Dispositif selon l'une des revendications 10 ou 11, **caractérisé en ce que** le réceptacle (1') présente une ouverture de chargement de petite surface à titre de cadre sous la forme d'une gaine (1') rectangulaire car la gaine (1') se compose de parois latérales (1a, 1c ou 1b, 1d) étroites adjacentes les unes aux autres en alternance et de parois principales (11, 1m) de grande surface.

14. Dispositif selon l'une des revendications 10 ou 11, **caractérisé en ce que** le réceptacle (1"a) se compose d'au moins deux parois latérales (1a, 1c) parallèles disposées à une certaine distance, qui sont enfonçables simultanément dans une couche de sable (13) et d'une paroi de fond et le cas échéant de recouvrement (1L, 1m) qui peuvent être enfoncées également dans la couche de sable (13) pour délimiter l'espace de réception (8) après l'enfoncement des parois latérales (1a, 1c).

15. Dispositif selon l'une des revendications 10, 11 ou 14, **caractérisé en ce que** le réceptacle (1"b) se compose d'une section transversale en forme de U ayant des parois latérales parallèles (1a, 1c) et une paroi de fond (1L) reliant celles-ci.

16. Dispositif selon l'une des revendications 12 à 15, **caractérisé en ce que**, lors de l'enfoncement, la face arrière est fermée par une paroi (1c, 5) et la face avant lors de l'enfoncement est recouverte aussi, le cas échéant, au moins partiellement par une partie couvercle (1b, 14).

17. Dispositif de traitement (15) présentant le dispositif selon l'une des revendications 10 à 16, le réceptacle (1, 1', 1") rempli étant enfoncé dans le dispositif de traitement (15) dans la zone de production avec la plaque de fond (5a) se trouvant en bas, le dispositif de traitement (15) présentant une racle (22) avec laquelle la surface de sable supérieure (9a) peut être lissée sur le bord du réceptacle (1i) ouvert vers le bas, et au moins une couche support (23) en forme de bande étant tenue prête dans le sens du traitement (15), qui peut être tirée sur la surface de sable (9a) lissée et sur laquelle peut être déposée la colle pénétrant dans le sable (9).

18. Dispositif de traitement (15) selon la revendication 17, **caractérisé en ce que**, pour prédéfinir l'épaisseur de la matière de la couche de renfort (46) sous forme de gâteau ou de soupe à déposer sur la couche support (23), la racle (48) peut être tirée au-dessus de celle-ci à une hauteur prédéfinie.

19. Dispositif selon l'une des revendications 10 à 16, **caractérisé en ce que** les parois du réceptacle (1a-d et 11,1m) sont conçues sous la forme de doubles parois avec un renfort (1h) inséré entre les deux.

20. Dispositif selon la revendication 19, **caractérisé en ce que** le renfort (1h) se compose d'un matériau métallique ayant des arêtes ou des ondulations.

21. Procédé selon l'une des revendications 1 à 8, **caractérisé en ce que** la colle ou le liant peut être pulvérisé, badigeonné, roulé ou coulé.

22. Parois, plafonds ou sols dans des bâtiments ou sur des façades extérieures, dotés de couches de sables consolidées fabriquées d'après le procédé selon au moins l'une des revendications 1 à 9 sous forme de multiples bandes de couches à titre de revêtement, les bandes de couches étant obtenues par enlèvement couche par couche de couches de sables à l'état naturel d'une carrière de sable ou de gravillons et les bandes de couches étant déposées avec une couche support (23) flexible et poreuse et les surfaces apparentes des bandes de couches étant scellées.
